# EUROPEAN PATENT APPLICATION

(11) **EP 4 478 360 A1**
(43) Date of publication of application: **18.12.2024**
(21) Application number: 23811953.1
(22) Date of filing: 10.03.2023
(51) Int. Cl.: G10L 21/0272, G10L 17/02, G10L 25/87, G10L 25/15, G06N 20/00

(54) **ELECTRONIC APPARATUS AND CONTROL METHOD THEREFOR**

(30) Priority: 23.05.2022 KR 20220062959; 25.11.2022 KR 20220160910
(71) Applicant: Samsung Electronics Co., Ltd., Gyeonggi-do, 16677 (KR)
(72) Inventor: KIM, Soofeel, Suwon-si Gyeonggi-do 16677 (KR); KIM, Jiwon, Suwon-si Gyeonggi-do 16677 (KR); KIM, Jongtae, Suwon-si Gyeonggi-do 16677 (KR); HWANG, Jaeyong, Suwon-si Gyeonggi-do 16677 (KR)
(74) Representative: Appleyard Lees IP LLP
(86) International application number: PCT/KR2023/003317
(87) International publication number: WO 2023/229166

(57) **Abstract**

An electronic apparatus includes: a memory storing at least one instruction; and at least one processor configured to divide audio data into a plurality of periods to include overlapping regions, acquire an audio feature from each of the plurality of divided periods, identify a first audio source and a second audio source in each of the plurality of divided periods based on the audio feature, and acquire first audio data corresponding to the first audio source and second audio data corresponding to the second audio source from the audio data.

## Description

### [Technical Field]

The disclosure relates to apparatuses and methods for processing audio signals, and more particularly, to electronic apparatuses and methods for separating audio signals into audio sources.

### [Background Art]

In audio processing technology, an audio separation model may be used for separating audio signals for each speaker from one mixed audio signal. For example, in a scenario in which there is an audio signal of 10 seconds with a male speaker and a female speaker talking simultaneously, the audio separation model may separate the audio signal of 10 seconds into an audio signal of 10 seconds that is uttered by the male and an audio signal of 10 seconds that is uttered by the female.

However, there may be several speakers in the audio signal to be analyzed, and in this case, an output result from the audio separation model may have a lower quality. For example, the audio signals of different speakers may be combined with each other. Moreover, the audio signals may include audio from more than two speakers.

In addition, even in the scenario with only two speakers, an order of speakers in the output result may not be regular in case that the audio signal is divided into short periods and then output by the audio separation model. Therefore, the audio signals of different speakers may be combined with each other.

In addition, the output result from the audio separation model may have a lower quality in case that the audio separation model separates an audio signal that includes more speakers than the number of allowable divided speakers.

### [Disclosure of Invention]

### [Technical Problem]

The disclosure provides an electronic apparatus which may divide audio information into a plurality of audio information including overlapping regions and acquire audio data for each audio source from the divided audio information, and a controlling method thereof.

According to an aspect of the disclosure, there is provided an electronic apparatus including: a memory configured to store at least one instruction; and at least one processor configured to execute the at least one instruction to: divide audio data into a plurality of sections of audio data based on a plurality of time periods having a plurality of overlapping regions, acquire an audio feature from each of the plurality of sections, identify a first audio source and a second audio source in each of the plurality of sections based on the audio feature, and acquire first audio data corresponding to the first audio source and second audio data corresponding to the second audio source from the audio data.

The at least one processor may be further configured to divide the audio data to: acquire a first section corresponding to a first period, among the plurality of time periods, and acquire a second section corresponding to a second period, among the plurality of time periods, wherein the second period is different from the first period, and wherein the first section and the second section comprises an overlapping region, among the overlapping regions.

The at least one processor may be configured to identify a plurality of audio blocks based on the first audio source or the second audio source in each of the plurality of time periods; acquire the first audio data by combining two or more first audio blocks, among the plurality of audio blocks, corresponding to the first audio source with each other; and acquire the second audio data by combining two or more second audio blocks, among the plurality of audio blocks, corresponding to the second audio source with each other.

The at least one processor may be further configured to identify the overlapping regions in the plurality of audio blocks, and acquire the first audio data and the second audio data by comparing the plurality of overlapping regions with each other.

The at least one processor may be further configured to: acquire similarity between the plurality of overlapping regions in the plurality of audio blocks, acquire the first audio data by combining the two or more first audio blocks having similarity greater than or equal to a first threshold value; and acquire the second audio data by combining the two or more second audio blocks having similarity greater than or equal to the first threshold value.

The at least one processor may be further configured to extend at least one of the overlapping regions when the similarity is less than the first threshold value and greater than or equal to a second threshold value, and divide the audio data based on the extended overlapping region.

The at least one processor may be further configured to acquire a peak value of an audio signal in a first audio block among the plurality of audio blocks, acquire an average value of the audio signal included in an overlapping region of the first audio block, and identify whether the overlapping region is silent based on a difference between the peak value and the average value.

The at least one processor may be further configured to identify a number of audio sources included in the audio data, and divide the audio data when the number of audio sources that is identified is less than a threshold number.

The at least one processor may be further configured to divide the audio data when a duration of the audio data is greater than or equal to a threshold time.

The at least one processor may be configured to identify the number of audio sources in the audio data based on a first artificial intelligence model stored in the memory, and acquire the first audio data and the second audio data based on a second artificial intelligence model stored in the memory, the first artificial intelligence model being different from the first artificial intelligence model.

According to another aspect of the disclosure, there is provided a controlling method of an electronic apparatus, the method including: dividing audio data into a plurality of sections of audio data based on a plurality of time periods having a plurality of overlapping regions; acquiring an audio feature from each of the plurality of sections; identifying a first audio source and a second audio source in each of the plurality of sections based on the audio feature; and acquiring first audio data corresponding to the first audio source and second audio data corresponding to the second audio source from the audio data.

The dividing the audio data may include: acquiring a first section corresponding to a first period, among the plurality of time periods, and acquiring a second section corresponding to a second period, among the plurality of time periods, wherein the second period is different from the first period, and wherein the first section and the second section comprises an overlapping region, among the overlapping regions.

The method may further include identifying a plurality of audio blocks based on the first audio source or the second audio source in each of the plurality of time periods, wherein the acquiring the first audio data and the second audio data comprises: acquiring the first audio data by combining two or more first audio blocks, among the plurality of audio blocks, corresponding to the first audio source with each other; and acquiring the second audio data by combining two or more second audio blocks, among the plurality of audio blocks, corresponding to the second audio source with each other.

The acquiring of the first audio data and the second audio data may include: identifying the plurality of overlapping regions in the plurality of audio blocks, and acquiring the first audio data and the second audio data by comparing the plurality of overlapping regions with each other.

The method may further include: acquiring similarity between the plurality of overlapping regions in the plurality of audio blocks, wherein the acquiring the first audio data and the second audio data comprises: acquiring the first audio data by combining the two or more first audio blocks having similarity greater than or equal to a first threshold value; and acquiring the second audio data by combining the two or more second audio blocks having similarity greater than or equal to the first threshold value.

### [Brief Description of Drawings]

FIG. 1 is a block diagram illustrating an electronic apparatus according to an example embodiment of the disclosure.
FIG. 2 is a block diagram for illustrating a specific configuration of the electronic apparatus of FIG. 1.
FIG. 3 is a view for explaining an operation of identifying a plurality of audio sources from one audio information.
FIG. 4 is a flowchart illustrating an operation of acquiring audio data corresponding to each of the plurality of audio sources.
FIG. 5 is a flowchart illustrating an operation of analyzing the audio source by dividing the audio information.
FIG. 6 is a flowchart illustrating an operation of acquiring the audio data corresponding to the audio source by combining audio blocks with each other.
FIG. 7 is a view for illustrating an operation of dividing the audio information to divide the plurality of audio sources from each other.
FIG. 8 is a view for illustrating the divided audio block.
FIG. 9 is a view for illustrating an operation of dividing the audio information until a predetermined number of audio sources are identified.
FIG. 10 is a flowchart illustrating an operation of acquiring the audio data corresponding to each of the plurality of audio sources.
FIG. 11 is a flowchart illustrating an operation of dividing the audio information by identifying the number of audio sources.
FIG. 12 is a flowchart for illustrating an operation considering a minimum time of the audio information to be divided.
FIG. 13 is a flowchart illustrating an operation of performing no analysis when the number of audio sources is beyond an acceptable range.
FIG. 14 is a flowchart illustrating an operation of acquiring the audio data corresponding to the audio source by combining the audio blocks with each other.
FIG. 15 is a flowchart illustrating an operation of adding a silent block in acquiring the audio data.
FIG. 16 is a view for illustrating an operation of acquiring similarity between the audio blocks.
FIG. 17 is a view for illustrating an operation of acquiring the audio data corresponding to each audio source by dividing the audio information.
FIG. 18 is a view for illustrating an overlapping region in the operation of acquiring the similarity.
FIG. 19 is a view for illustrating an operation of combining the audio blocks with each other based on the similarity.
FIG. 20 is a flowchart for illustrating an operation of acquiring the similarity between the audio blocks.
FIG. 21 is a flowchart for illustrating a specific example of the operation of acquiring the similarity between the audio blocks.
FIG. 22 is a view for illustrating an operation of analyzing the audio block in various examples.
FIG. 23 is a flowchart illustrating an operation of analyzing an audio feature based on whether the overlapping region is silent.
FIG. 24 is a flowchart illustrating a specific example of the operation of analyzing the audio feature based on whether the overlapping region is silent.
FIG. 25 is a flowchart illustrating an operation of analyzing the audio feature based on whether an overlapping region of another period is silent.
FIG. 26 is a flowchart illustrating a specific example of the operation of analyzing the audio feature based on whether the overlapping region of another period is silent.
FIG. 27 is a flowchart illustrating an operation of increasing the overlapping region.
FIG. 28 is a flowchart for illustrating an operation of analyzing the audio feature.
FIG. 29 is a view for illustrating an operation of determining whether the overlapping region is silent in various examples.
FIG. 30 is a view for illustrating an operation of determining whether the overlapping region is silent in various examples.
FIG. 31 is a view for illustrating an operation of acquiring the similarity.
FIG. 32 is a view for illustrating a user interface (UI) related to an audio extraction operation in various examples.
FIG. 33 is a view for illustrating an operation of displaying a UI for changing a volume of separated audio data at a location corresponding to a specific object.
FIG. 34 is a flowchart illustrating an operation of displaying the UI for changing the volume of the separated audio data at the location corresponding to the specific object.
FIG. 35 is a flowchart for illustrating a controlling method of an electronic apparatus in various embodiments.

### [Mode for the Invention]

Hereinafter, the disclosure is described in detail with reference to the accompanying drawings.

General terms that are currently widely used are selected as terms used in embodiments of the disclosure in consideration of functions in the disclosure, and may be changed based on the intentions of those skilled in the art or a judicial precedent, the emergence of a new technique, and the like. In addition, in a specific case, terms arbitrarily chosen by an applicant may exist. In this case, the meanings of such terms are mentioned in detail in corresponding description portions of the disclosure. Therefore, the terms used in the disclosure need to be defined on the basis of the meanings of the terms and the contents throughout the disclosure rather than simple names of the terms.

In the disclosure, an expression "have," "may have," "include," "may include," or the like, indicates the existence of a corresponding feature (for example, a numerical value, a function, an operation, or a component such as a part), and does not exclude the existence of an additional feature.

An expression, "at least one of A or/and B" may indicate either "A or B," or "both of A and B."

Expressions "first," "second," or the like, used in the disclosure may qualify various components regardless of a sequence and/or importance of the components. These expressions are used only to divide one component from the other components, and do not limit the corresponding components.

In case that any component (for example, a first component) is mentioned to be "(operatively or communicatively) coupled with/to" or "connected to" another component (for example, a second component), it is to be understood that the any component may be directly coupled to the another component or may be coupled to the another component through still another component (for example, a third component).

A term of a singular number may include its plural number unless explicitly indicated otherwise in the context. It is to be understood that a term "include" or "formed of' used in the specification specifies the presence of features, numerals, steps, operations, components, parts or combinations thereof, which is mentioned in the specification, and does not preclude the presence or addition of one or more other features, numerals, steps, operations, components, parts or combinations thereof.

In the disclosure, a "module" or a "~er/~or" may perform at least one function or operation, and be implemented by hardware or software, or be implemented by a combination of hardware and software. In addition, a plurality of "modules" or a plurality of "~ers/~ors" may be integrated in at least one module and implemented by at least one processor (not shown) except for a "module" or a "-er/or" that needs to be implemented by specific hardware.

In the specification, such a term as a "user" may refer to a person who uses an electronic apparatus or an apparatus (e.g., an artificial intelligence electronic apparatus) which uses an electronic apparatus.

Hereinafter, the embodiments of the disclosure are described in detail with reference to the accompanying drawings.

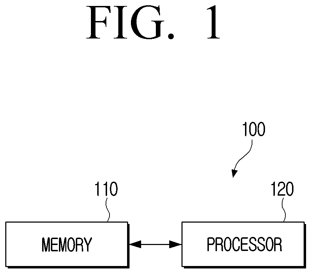

FIG. 1 is a block diagram illustrating an electronic apparatus 100 according to an embodiment of the disclosure.

Referring to FIG. 1, the electronic apparatus 100 may include a memory 110 and at least one processor 120. For example, the electronic apparatus 100 may include one or more processors configured to perform one or more operations of the electronic apparatus 100.

The electronic apparatus 100 may be an apparatus that analyzes audio data. For example, the electronic apparatus 100 may be an apparatus including an artificial intelligence model that receives the audio data and separates audio signals for each audio source.

The memory 110 may store at one or more instructions or the audio data. According to an example embodiment, the memory 110 may store the one or more instructions and audio data. According to another example embodiment, the memory 110 may store other data in additional to the one or more instructions and audio data.

At least one processor 120 may perform an overall control operation of the electronic apparatus 100. In detail, the at least one processor 120 may function to control overall operations of the electronic apparatus 100. The at least one processor 120 may perform the following operations by executing one or more instructions stored in the memory 110.

At least one processor 120 may divide the audio data into a plurality of periods to include overlapping regions, acquire an audio feature from each of the divided periods, identify a first audio source and a second audio source in each of the plurality of divided periods based on the audio feature, and acquire first audio data corresponding to the first audio source and second audio data corresponding to the second audio source from the audio data.

Here, the audio data may be referred to as audio information or an audio file. The divided audio data may be referred to as divided data (e.g., first divided data and second divided data). Therefore, the plurality of periods may indicate time periods in which the audio data is divided based on a predetermined standard. In addition, the divided data may indicate the audio data corresponding to the divided time period.

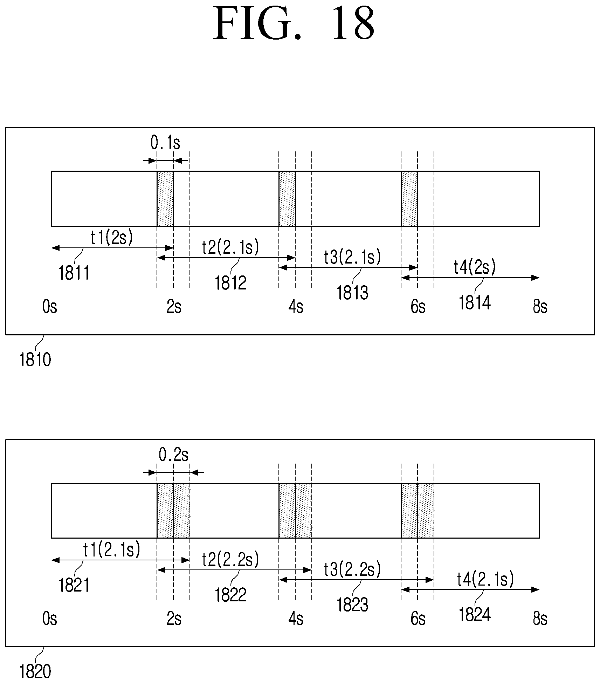

Here, the overlapping region may indicate an overlapping period or an overlapping time period as shown, for example, in FIGS. 18.

According to an example embodiment, the at least one processor 120 may divide the audio data stored in the memory 110 by a predetermined time based on the overlapping region, acquire the audio feature based on the divided audio data, identify the first audio source and the second audio source from the divided audio data based on the audio feature, and acquire the first audio data corresponding to the first audio source and second audio data corresponding to the second audio source.

According to another example embodiment, the at least one processor 120 may divide audio data into a plurality sections of audio data based on a plurality of overlapping time periods, acquire the audio feature based on the plurality sections of audio data, identify the first audio source and the second audio source from the plurality sections of audio data based on the audio feature, and acquire the first audio data corresponding to the first audio source and second audio data corresponding to the second audio source.

An operation of acquiring the audio feature based on the divided audio data may indicate an operation of acquiring a standard square error of the overlapping period based on the divided audio data.

An operation of identifying the first audio source and the second audio source from the divided audio data based on the audio feature may include an operation of identifying the first audio source and the second audio source from the divided audio data based on the standard square error for each period. The at least one processor 120 may acquire the audio data (or original information). The audio data may include a human voice and a sound generated by a non-human object. The human or the object that emits sound may be referred to as the audio source. The audio data may indicate sound information.

According to an example embodiment, the at least one processor 120 may divide the received audio data. For example, the at least one processor 120 may divide the audio data based on a time. According to an example embodiment, the time may be a predetermined time, which may indicate a time or a unit time corresponding to a threshold ratio of a total time. For example, the predetermined time may indicate a time or a unit time corresponding to a threshold ratio of a total time of the audio data.

According to an example embodiment, the threshold ratio of the total time may be 50%, and the at least one processor 120 may divide the audio data based on 50% of the total time. For example, in a case in which the audio data includes an audio signal of 8 seconds, the at least one processor 120 may divide the audio signal of 8 seconds into two audio signals based on 4 seconds.

The unit time may indicate a unit time predetermined by a user or a predetermined unit time applied to the artificial intelligence model. The at least one processor 120 may divide the audio data based on the unit time. For example, the unit time may be 2 seconds, and the at least one processor 120 may divide the audio signal of 8 seconds into four audio signals of 2 seconds. However, the unit time of 2 seconds is just an example, and as such, according to another example embodiment, the unit time may be different than 2 seconds, and/or the unit time may be changed by a user setting or the artificial intelligence model to be applied.

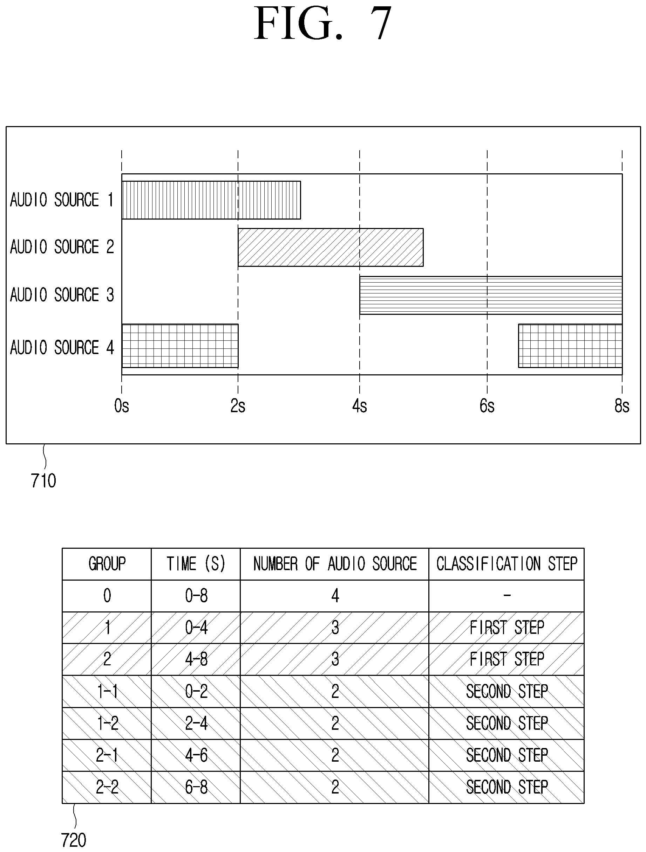

A detailed description related to the classification operation is described with reference to FIGS. 7, 8, 9.

According to an example embodiment, the at least one processor 120 may acquire the audio feature based on the divided audio signal (or divided audio data). The audio features may include the waveform, frequency, amplitude, or the like of the audio signal. The at least one processor 120 may acquire (or extract) the audio feature based on the divided audio signal (or divided audio data).

According to an example embodiment, the at least one processor 120 may input the audio data as input data to the artificial intelligence model. According to an example embodiment, the artificial intelligence model may be a deep learning model. The at least one processor 120 may then acquire the audio feature corresponding to the audio data as output data through the artificial intelligence model. Here, the artificial intelligence model may indicate an audio recognition model that analyzes the audio signal.

In detail, the at least one processor 120 may receive the audio data (or audio file). For example, the audio file may include an audio signal of one second.

In case that the audio data is analog data, the at least one processor 120 may acquire digital data corresponding to the analog data. The digital data may indicate raw data. For example, the digital data may be data representing sounds for every 0.001 second as numbers.

According to an example embodiment, the at least one processor 120 may divide the digital data in units of a predetermined time. For example, digital data of one second may be divided in units of 25 ms. The data of one second may be divided into 40 periods. If there are the overlapping periods, the data of one second may be divided into more than 40 periods.

According to an example embodiment, the at least one processor 120 may acquire a Mel-Frequency Cepstral coefficient (MFCC) based on the plurality of divided data (or period data) divided by the predetermined time unit.

According to an example embodiment, the at least one processor 120 may normalize a MFCC value for the input data of the artificial intelligence model. The artificial intelligence model may have a predetermined range of the input data, and at least one processor 120 may normalize the MFCC value for the predetermined range of the input data.

According to an example embodiment, the at least one processor 120 may input (or apply) the normalized MFCC value to the artificial intelligence model as the input data. In addition, the at least one processor 120 may acquire the audio features (or the output data) corresponding to the normalized MFCC value (or the input data) from the artificial intelligence model.

According to an example embodiment, the divided audio signal may be mixed with the audio signal output (or generated) from at least one audio source. According to an example embodiment, the at least one processor 120 may separate the mixed audio data for each audio source. The separated first audio data and second audio data may be referred to as the first audio signal and the second audio signal.

According to an example embodiment, the at least one processor 120 may identify the audio source based on the audio feature (or the extracted audio feature). According to an example embodiment, the at least one processor 120 may identify the audio source based on the audio feature extracted or output from the artificial intelligence model. In case that the plurality of audio sources are included in the divided audio data, the at least one processor 120 may determine the first audio source and the second audio source based on the audio feature.

According to an example embodiment, the at least one processor 120 may acquire the first audio data corresponding to the first audio source among all the audio data (or the original information). In addition, the at least one processor 120 may acquire the second audio data corresponding to the second audio source among the audio data (or the original information). As a result, the at least one processor 120 may separate the audio signals output from each of the audio sources from the audio data (or the original information) in which the audio signals output from the first audio source and the second audio source are mixed.

Meanwhile, the at least one processor 120 may acquire the first divided data of a first period and the second divided data of a second period different from the first period by dividing the audio data, and the first divided data and the second divided data may include the overlapping regions.

For example, the at least one processor 120 may divide the audio data based on the predetermined time (e.g., 4 seconds). The at least one processor 120 may divide the audio data of an entire period (e.g., from zero seconds to 8 second) to acquire the first divided data of the first period (e.g., from zero seconds to 4 second) and the second divided data of the second period (e.g., from 3.9 second to 8 second). The overlapping region may be 3.9 seconds to 4 seconds.

In another example, the at least one processor 120 may divide the audio data of an entire period (e.g., from zero seconds to 8 seconds) to acquire the first divided data of the first period (e.g., from zero seconds to 4.1 seconds) and the second divided data of the second period (e.g., from 3.9 seconds to 8 seconds). The overlapping region may be 3.9 seconds to 4.1 seconds.

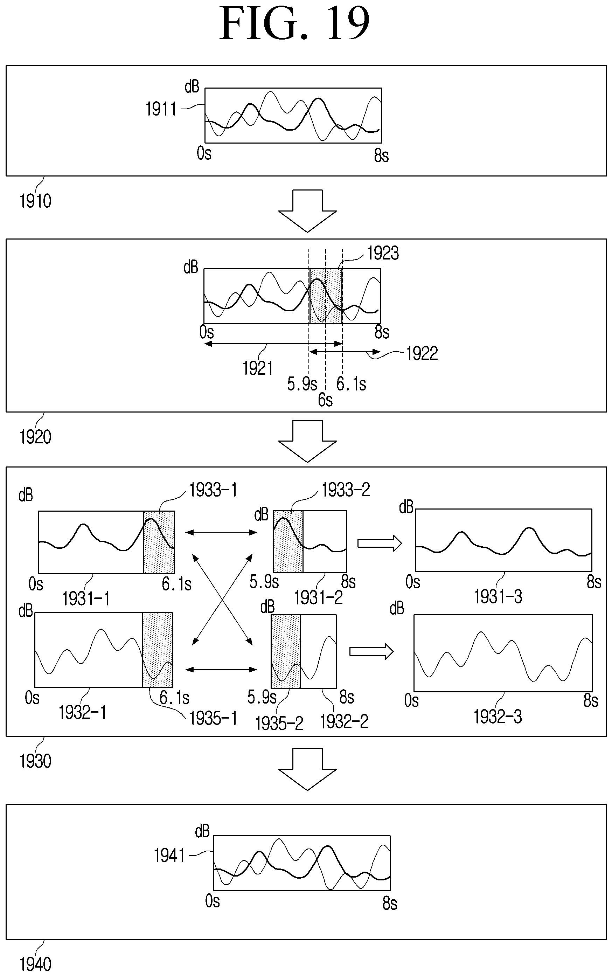

A detailed description related to the overlapping region is described with reference to FIGS. 18 and 19.

Meanwhile, the at least one processor 120 may identify a plurality of audio blocks divided based on the audio source in the divided audio data, acquire the first audio data by combining the audio blocks corresponding to the first audio source with each other, and acquire the second audio data by combining the audio blocks corresponding to the second audio source with each other.

According to an example embodiment, the at least one processor 120 may identify the plurality of audio blocks for each audio source in the divided audio data. The at least one processor 120 may separate the audio signals corresponding to different audio sources from each other without specifying an audio source. The at least one processor 120 may separate the audio signals of various audio sources mixed in the audio data.

According to an example embodiment, the at least one processor 120 may acquire a first audio block and a second audio block that have different audio sources from the first divided data. In addition, the at least one processor 120 may acquire third and fourth audio blocks that have different audio sources from the second divided data. The at least one processor 120 may simply acquire the plurality of audio blocks having different audio sources without determining which audio source (e.g., adult male or car noise) each audio block corresponds to.

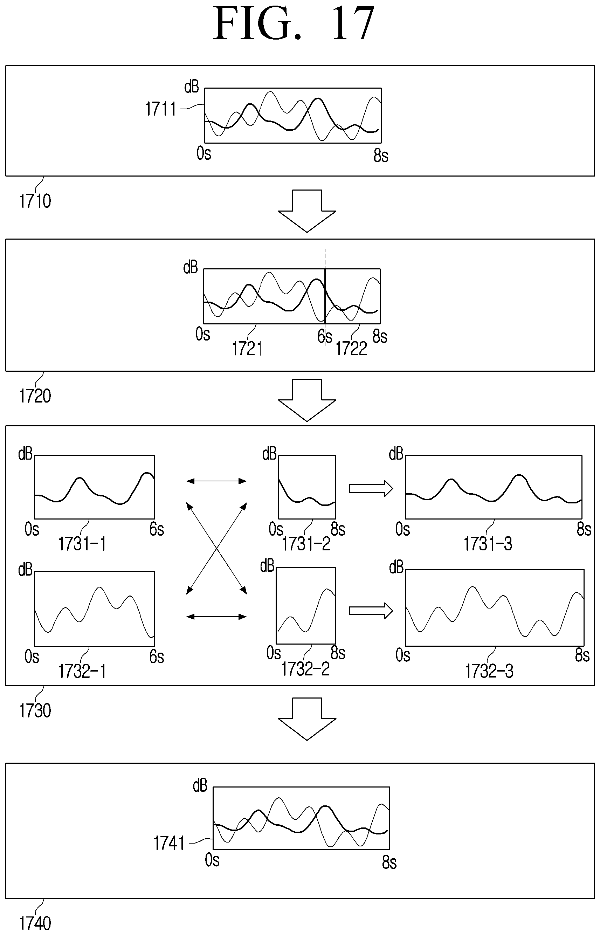

According to an example embodiment, the at least one processor 120 may acquire one audio data by combining highly related blocks with each other among the acquired audio blocks. A specific operation related thereto is described with reference to FIG. 17.

Meanwhile, the at least one processor 120 may identify the overlapping regions included in the plurality of audio blocks, and acquire the first audio data and the second audio data by comparing the identified overlapping regions with each other.

According to an example embodiment, the at least one processor 120 may identify the audio signal included in the overlapping region among the audio signals included in the audio block. The at least one processor 120 may combine the audio blocks corresponding to a specific audio source with each other by comparing the audio signals included in the overlapping regions. A specific operation related thereto is described with reference to FIG. 19.

Meanwhile, the at least one processor 120 may acquire similarity between the overlapping regions included in the plurality of audio blocks, and acquire the first audio data and the second audio data by combining the audio blocks each having the similarity greater than or equal to a first threshold value with each other.

According to an example embodiment, the at least one processor 120 may determine whether to combine the audio block acquired in the first period and the audio block acquired in the second period with each other based on the similarity between the overlapping regions. According to an example embodiment, the at least one processor 120 may compare the similarity between the overlapping regions included in the plurality of audio blocks. An operation of acquiring and comparing the similarity between the overlapping regions may be performed for the audio blocks having adjacent time periods.

For example, in a case that the first audio block and the second audio block are acquired in the period of zero seconds to 2 second, and the third audio block and the fourth audio block are acquired in the period of 2 second to 4 second. The at least one processor 120 may determine whether to combine the first audio block with the third audio block or the fourth audio block. In addition, the at least one processor 120 may determine whether to combine the second audio block with the third audio block or the fourth audio block.

According to an example embodiment, the at least one processor 120 may combine the audio blocks that are used to acquire the similarity with each other when the similarity is greater than or equal to the first threshold value. In addition, the at least one processor 120 may acquire the audio data of the entire time period by repeating the operation of combining the audio blocks with each other.

Meanwhile, the at least one processor 120 may extend the overlapping region when the similarity is less than the first threshold value and greater than or equal to a second threshold value, and divide the audio data based on the extended overlapping region.

The first threshold value may be greater than the second threshold.

According to an example embodiment, when the similarity is greater than or equal to the first threshold value, the electronic apparatus 100 may combine the audio blocks compared to acquire the similarity with each other.

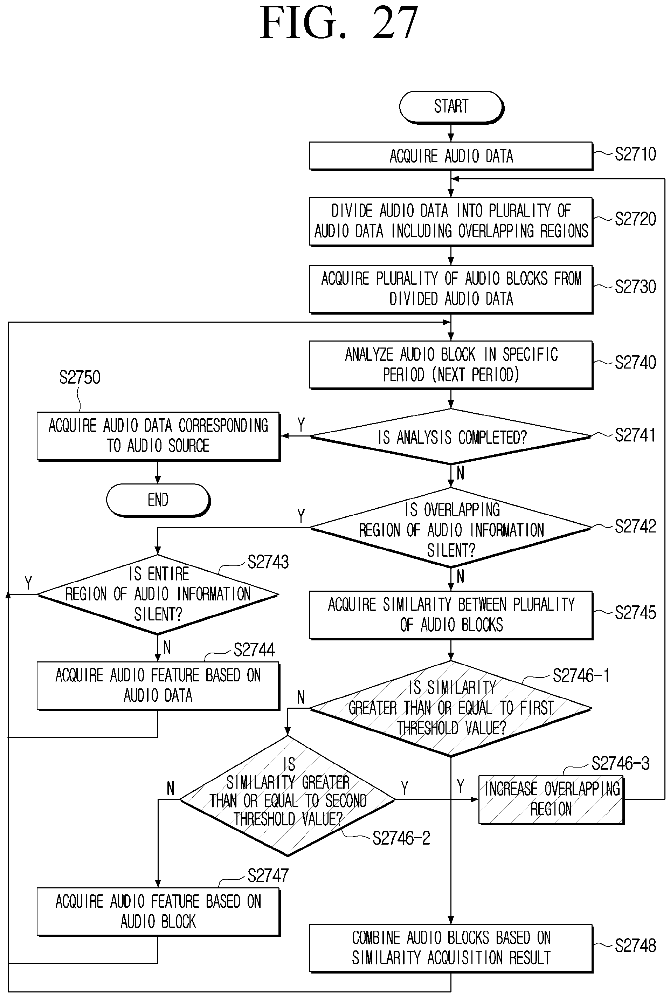

According to an example embodiment, when the similarity is less than the first threshold value and greater than or equal to the second threshold value, the electronic apparatus 100 may re-divide the audio data by extending (or increasing) the overlapping region. This operation is to re-evaluate the similarity comparison by increasing the overlapping region. A detailed description thereof is described with reference to FIG. 27. In the case of extending the overlapping region, a more accurate comparison may be possible even though a processing time is increased.

According to an example embodiment, when the similarity is less than the second threshold value, the electronic apparatus 100 may acquire the audio feature for a target audio block. Here, the at least one processor 120 determines that there are no more audio blocks to be connected.

Meanwhile, the at least one processor 120 may acquire a peak value of the audio signal included in the first audio block among the audio blocks, acquire an average value of the audio signal included in the overlapping region of the first audio block, and identify whether the overlapping region is silent based on a difference between the peak value and the average value.

According to an example embodiment, the at least one processor 120 may determine whether the overlapping region included in the audio block is silent. Even though the audio signals are separated for each audio source, noise may exist and an error may occur during a separation process. Accordingly, the at least one processor 120 may determine whether the overlapping region is silent by a detailed method.

According to an example embodiment, the at least one processor 120 may determine whether the overlapping region is silent based on an absolute value of the audio signal. The at least one processor 120 may determine that the overlapping region is silent in case that the average value of the audio signal included in the overlapping region is less than or equal to a threshold value.

According to an example embodiment, the at least one processor 120 may acquire a peak value of the audio signal in the entire time period of the audio block. The at least one processor 120 may acquire the average value of the audio signal included in the overlapping region. The at least one processor 120 may determine whether the overlapping region is silent by comparing the peak value and the average value with each other. The at least one processor 120 may determine that the overlapping region is silent in case that the difference between the peak value and the average value is greater than or equal to the threshold value. The average value may be smaller than the peak value, and the difference between the peak value and the average value being greater than the threshold value may indicate a case where the average value is relatively significantly lower than the peak value. A method using the peak value may have higher accuracy in determining whether the overlapping region is silent than a method of simply determining whether the average value is lower than the threshold value.

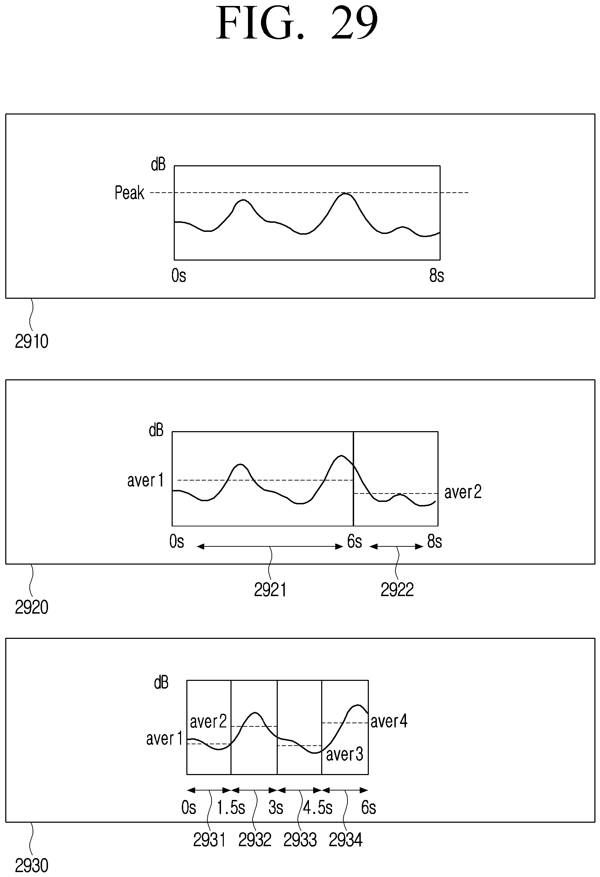

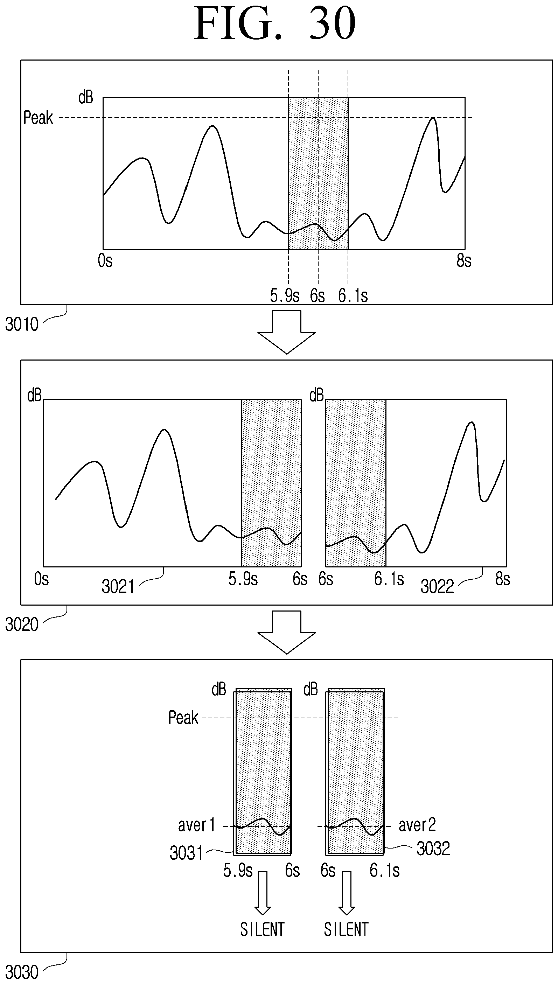

A detailed description of using the peak value and the average value is described with reference to FIGS. 29 and 30.

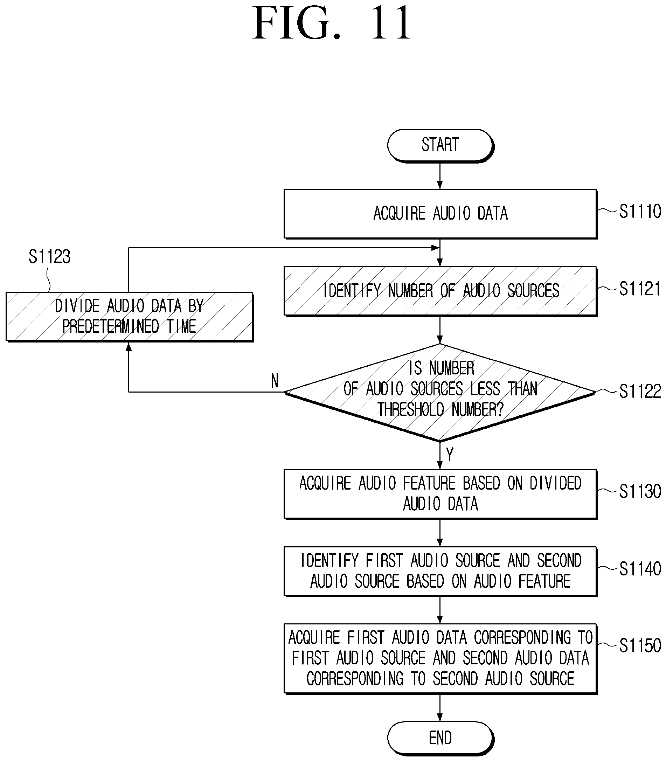

Meanwhile, the at least one processor 120 may identify the number of audio sources included in the audio data, and divide the audio data in case that the number of identified audio sources is less than a threshold number. A detailed description of this operation is described with reference to FIG. 11.

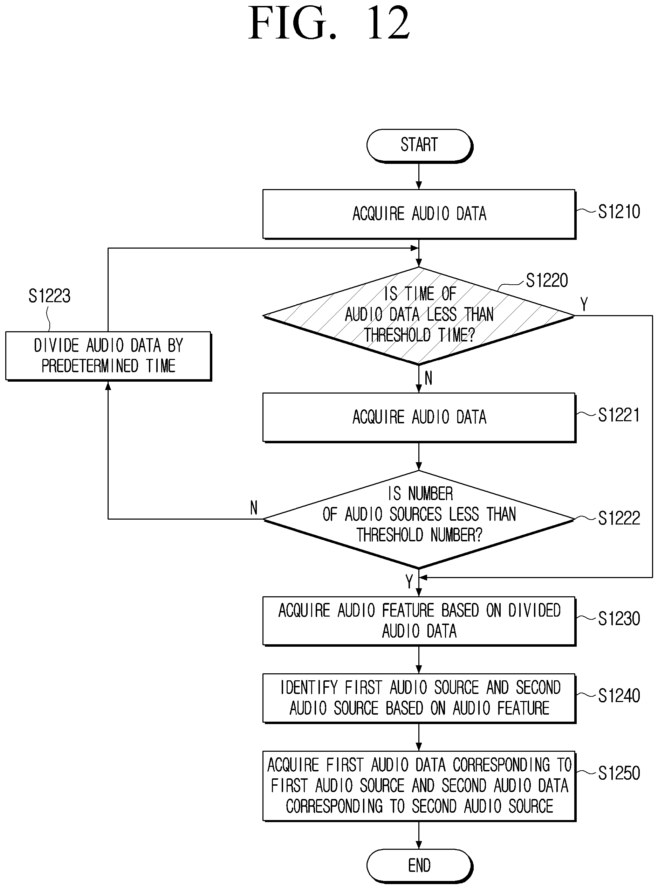

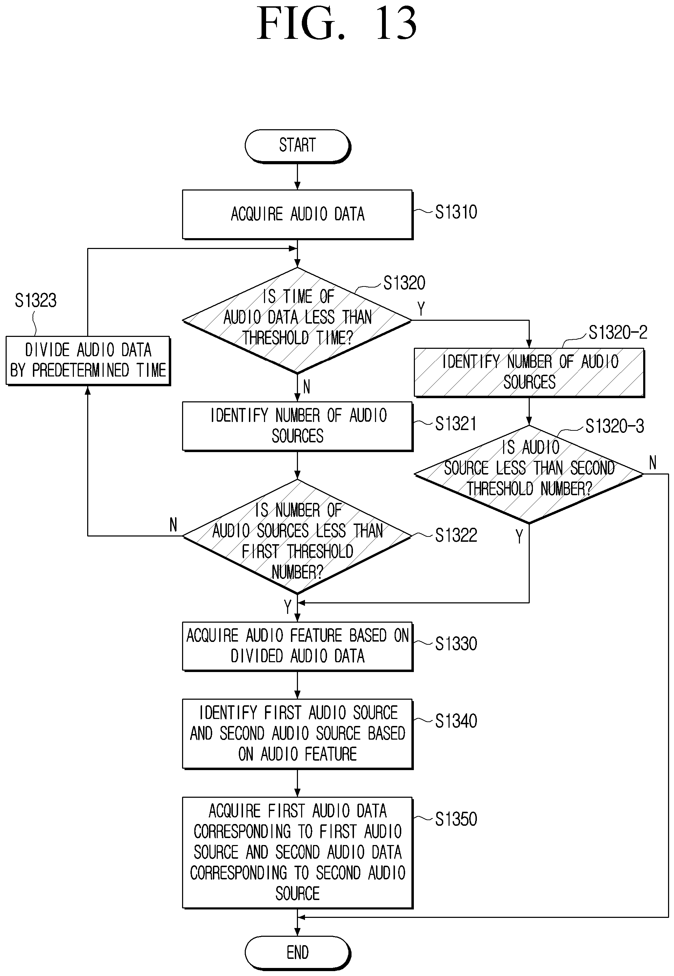

Meanwhile, the at least one processor 120 may divide the audio data in case that a time of the audio data is greater than or equal to a threshold time. A detailed description of this operation is described with reference to FIGS. 12 and 13.

Meanwhile, the at least one processor 120 may identify the number of audio sources included in the audio data based on a first artificial intelligence model stored in the memory 110, and acquire the first audio data and the second audio data based on a second artificial intelligence model stored in the memory 110 and different from the first artificial intelligence model.

The first artificial intelligence model may be a model that receives the audio data as the input data and acquires the number of audio sources in the audio data as the output data. The at least one processor 120 may input the divided audio data to the first artificial intelligence model.

According to an example embodiment, the at least one processor 120 may identify only the number of audio sources in the audio data through the first artificial intelligence model. However, the at least one processor 120 may be is unable to specify the audio source. In this case, additional operations to extract and analyze the audio features may be implemented to specify or identify each of the audio sources.

The audio analysis operation may have a lower accuracy when the number of audio sources is greater than or equal to a threshold number. Accordingly, the first artificial intelligence model may determine whether the audio data may be used as the input data for the audio analysis operation.

According to an example embodiment, a second artificial intelligence model may be provided. The second artificial intelligence model may be a model that receives the audio data as the input data and separates the audio signals included in the audio data for each audio source. The at least one processor 120 may input the divided audio data to the second artificial intelligence model.

According to an example embodiment, the at least one processor 120 may separate the audio signals for each audio source through the second artificial intelligence model. The at least one processor 120 may acquire the plurality of audio blocks from the divided audio data, and combine the plurality of audio blocks for each audio source based on the similarity between the overlapping regions. In addition, the at least one processor 120 may extract the audio feature of the audio data (or the audio blocks) combined for each audio source. In addition, the at least one processor 120 may specify the audio source of the combined audio data based on the audio feature.

The first artificial intelligence model may perform an operation of determining the input data to be applied (or input) to the second artificial intelligence model.

The at least one processor 120 may separate the audio signals for each audio source through the second artificial intelligence model.

Meanwhile, the above description describes that the first artificial intelligence model and the second artificial intelligence model are different from each other according to an example embodiment. However, the disclosure is not limited thereto, and as according to another example embodiment, one artificial intelligence model may perform all of the above operations. According to an example embodiment, a first software module and a second software module may be included in one artificial intelligence model. The first software module may identify the number of audio sources included in the audio data, and the second software module may separate the audio signals for each audio source.

The electronic apparatus 100 according to the various example embodiments may acquire the audio data including the audio signals output from various audio sources. In addition, the electronic apparatus 100 may extract the audio signals for each audio source from the audio data. In extracting the audio signals for each audio source, the overlapping regions may be used to combine the divided audio blocks with each other. The audio combination process may have a higher accuracy in case of using the overlapping regions.

In addition, errors occurring in the combination process may be additionally corrected by extending the overlapping region in determining the similarity between the overlapping region. Accordingly, a result of separating the audio signals may have an improved quality.

In addition, it is possible to identify the audio source with high accuracy, even when the audio data or the audio block is of low quality, by dividing audio data or audio blocks in consideration of the number of audio sources, the threshold time or other parameters.

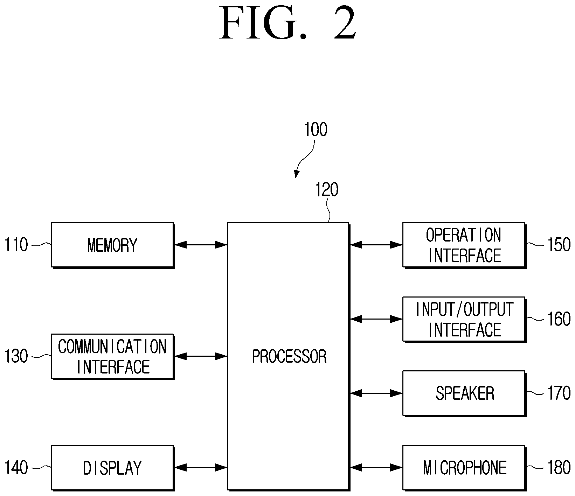

Meanwhile, the above description illustrates and describes only a simple configuration of the electronic apparatus 100, and various configurations may be further provided in its implementation. This case is described below with reference to FIG. 2.

FIG. 2 is a block diagram for illustrating a specific configuration of the electronic apparatus 100 of FIG. 1.

Referring to FIG. 2, the electronic apparatus 100 may include at least one of a memory 110, at least one processor 120, a communication interface 130, a display 140, an operation interface 150, and an input/output interface 160, a speaker 170 or a microphone 180.

Meanwhile, the description omits redundant descriptions of the same operations as those described above among the operations of the electronic apparatus 100.

In case that the electronic apparatus 100 is implemented as a server, the electronic apparatus 100 may receive the audio data from an external device through the communication interface 130.

In case that the electronic apparatus 100 is implemented as a television (TV), the electronic apparatus 100 may include the display 140 and the input/output interface 160.

In case that the electronic apparatus 100 corresponds to an artificial intelligence (AI) speaker, the electronic apparatus 100 may include the speaker 170.

In case that the electronic apparatus 100 analyzes the audio data collected in real time, the electronic apparatus 100 may include the microphone 180.

The electronic apparatus 100 in various examples of the present specification may include, for example, at least one of a smart phone, a tablet personal computer (PC), a mobile phone, a video phone, an e-book reader, a desktop PC, a laptop PC, a netbook computer, a workstation, a server, and a personal digital assistants (PDA), a portable multimedia player (PMP), an MP3 player, a medical device, a camera, or a wearable device. The wearable device may include at least one of an accessory type (for example, a watch, a ring, a bracelet, an anklet, a necklace, a glasses, a contact lens, or a head-mounted-device (HMD), a textile or clothing integral type (for example, an electronic clothing), a body attachment type (for example, a skin pad or a tattoo), or a living body implantation type circuit. In some examples, the electronic apparatus may include, for example, at least one of a television, a digital video disk (DVD) player, an audio player, a refrigerator, an air conditioner, a vacuum cleaner, an oven, a microwave oven, a washing machine, an air purifier, a set-top box, a home automation control panel, a security control panel, a media box (e.g., Samsung HomeSync^{™}, Apple TV^{™} or Google TV^{™}), a game console (e.g., Xbox^{™} or PlayStation^{™}), an electronic dictionary, an electronic key, a camcorder, or an electronic picture frame.

The memory 110 may be implemented as an internal memory such as a read-only memory (ROM) (e.g., electrically erasable programmable read-only memory (EEPROM)) or a random access memory (RAM), included in the at least one processor 120, or may be implemented as a memory separate from the at least one processor 120. In this case, the memory 110 may be implemented in the form of a memory embedded in the electronic apparatus 100, or may be implemented in the form of a memory detachable from the electronic apparatus 100, based on a data storing purpose. For example, data for driving the electronic apparatus 100 may be stored in the memory embedded in the electronic apparatus 100, and data for an extension function of the electronic apparatus 100 may be stored in the memory detachable from the electronic apparatus 100.

Meanwhile, the memory embedded in the electronic apparatus 100 may be implemented as at least one of a volatile memory (e.g., dynamic RAM (DRAM), static RAM (SRAM) or synchronous dynamic RAM (SDRAM)), a non-volatile memory (e.g., one time programmable ROM(OTPROM), programmable ROM (PROM), erasable and programmable ROM (EPROM), electrically erasable and programmable ROM (EEPROM)), a mask ROM, a flash ROM, a flash memory (e.g., NAND flash, NOR flash or the like), a hard drive or a solid state drive (SSD); and the memory detachable from the electronic apparatus 100 may be implemented as a memory card (e.g., compact flash (CF), secure digital (SD), micro secure digital (Micro-SD), mini secure digital (mini-SD), extreme digital (xD), multi-media card (MMC) or the like), an external memory (e.g., USB memory) which may be connected to a universal serial bus (USB) port, or the like.

The at least one processor 120 may be implemented as a digital signal processor (DSP), a microprocessor, or a time controller (TCON), which processes a digital signal. However, the processor 120 is not limited thereto, and may include one or more of the central processing unit (CPU), a micro controller unit (MCU), a micro processing unit (MPU), a controller, the application processor (AP), the graphics-processing unit (GPU), a communication processor (CP) or an advanced reduced instruction set computer (RISC) machines (ARM) processor, or may be defined by these terms. In addition, the at least one processor 120 may be implemented as a system-on-chip (SoC) or a large scale integration (LSI), in which a processing algorithm is embedded, or may be implemented as a field programmable gate array (FPGA). In addition, the at least one processor 120 may perform various functions by executing computer executable instructions stored in the memory 110.

The communicator 130 is a component performing communication with various types of external servers in various types of communication manners. The communication interface 130 may include a wireless communication module or a wired communication module. Here, each communication module may be implemented in the form of at least one hardware chip.

The wireless communication module may be a module that wirelessly communicates with the external device. For example, the wireless communication module may include at least one of a wireless-fidelity (Wi-Fi) module, a Bluetooth module, an infrared communication module, or other communication modules.

The Wi-Fi module and the Bluetooth module may respectively perform communication in a Wi-Fi manner and a Bluetooth manner. In case of using the Wi-Fi module or the Bluetooth module, it is possible to first transmit and receive various connection information such as a service set identifier (SSID) or a session key, connect communication using this connection information, and then transmit and receive various information.

The infrared communication module may perform communication based on infrared data association (IrDA) technology that wirelessly transmits data in a short distance using an infrared ray between visible and millimeter waves.

In addition to the above-described communication manners, other communication modules may include at least one communication chip performing communication based on various wireless communication standards such as Zigbee, third generation (3G), 3rd generation partnership project (3GPP), long term evolution (LTE), LTE advanced (LTE-A), 4th generation (4G) and 5th generation (5G).

The wired communication module may be a module that communicates with the external device by wire. For example, the wired communication module may include at least one of a local area network (LAN) module, an Ethernet module, a pair cable, a coaxial cable, an optical fiber cable, or an ultra wide-band (UWB) module.

The display 140 may be implemented in various types of displays such as a liquid crystal display (LCD), an organic light emitting diode (OLED) display and a plasma display panel (PDP). The display 140 may include a driving circuit, a backlight unit, and the like, which may be implemented in a form such as an amorphous silicon thin film transistor (a-si TFT), a low temperature poly silicon (LTPS) TFT, or an organic TFT (OTFT). Meanwhile, the display 140 may be implemented as a touch screen combined with a touch sensor, a flexible display, a three-dimensional (3D) display, or the like. In addition, according to an example embodiment of the disclosure, the display 140 may include not only a display panel outputting an image, but also a bezel housing the display panel. In particular, according to an example embodiment of the disclosure, the bezel may include a touch sensor (not shown) detecting user interaction.

The operation interface 150 may be implemented as a device such as a button, a touch pad, a mouse or a keyboard, or may be implemented as a touch screen which may also perform an operation input function in addition to the above-described display function. Here, the button may be any of various types of buttons such as a mechanical button, a touch pad, or a wheel, which is positioned in any region, such as a front surface portion, a side surface portion or a rear surface portion, of a body appearance of the electronic apparatus100.

The input/output interface 160 may be any of a high definition multimedia interface (HDMI), a mobile high-definition link (MHL), a universal serial bus (USB), a display port (DP), a thunderbolt, a video graphics array (VGA) port, a red-green-blue (RGB) port, a D-subminiature (D-SUB), or a digital visual interface (DVI). The input/output interface 160 may input/output at least one of audio or video signals. In some examples, the input/output interface 160 may include a port for inputting and outputting only the audio signal and a port for inputting and outputting only the video signal as its separate ports, or may be implemented as a single port for inputting and outputting both the audio signal and the video signal. Meanwhile, the electronic apparatus 100 may transmit at least one of the audio and video signals to the external device (for example, an external display device or an external speaker) through the input/output interface 160. In detail, an output port included in the input/output interface 160 may be connected to the external device, and the electronic apparatus 100 may transmit at least one of the audio and video signals to the external device through the output port.

Here, the input/output interface 160 may be connected to the communication interface. The input/output interface 160 may transmit information received from the external device to the communication interface or transmit information received through the communication interface to the external device.

The speaker 170 may be a component that outputs not only various audio data but also various notification sounds or voice messages.

The microphone 180 may be a component that receives a user voice or other sounds and converts the user voice or other sounds into the audio data. The microphone 180 may receive the user voice in case of being activated. For example, the microphone 180 may be formed integrally with the electronic apparatus 100 in its upper, front, or side direction. The microphone 180 may include various components such as a microphone collecting the user voice in an analog form, an amplifier circuit amplifying the collected user voice, an analog to digital (A/D) conversion circuit sampling the amplified user voice and converting the same into a digital signal, and a filter circuit removing a noise component from the converted digital signal.

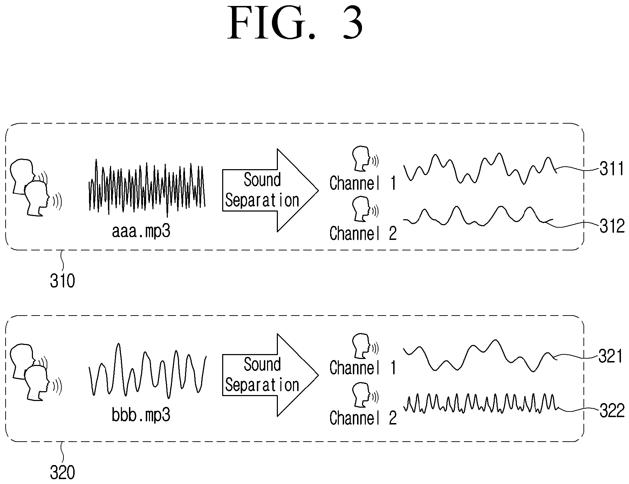

FIG. 3 is a view for explaining an operation of identifying the plurality of audio sources from one audio data.

Referring to item 310 of FIG. 3, audio data of aaa.mp3 may include audio data corresponding to two audio sources. For example, it may be assumed that the audio sources are all humans. Here, Aaa.mp3 may be an audio file in which two voices are mixed with each other. However, the disclosure is not limited thereto, as such, an audio file with more than two voices or more than two sounds may be provided. The electronic apparatus 100 may acquire the audio data corresponding to each audio source by analyzing one audio data. The electronic apparatus 100 may acquire audio data 311 including only a voice of a first speaker (or a first channel) and audio data 312 including only a voice of a second speaker (or a second channel).

Referring to item 320 of FIG. 3, the electronic apparatus 100 may analyze audio data of bbb.mp3 to acquire audio data 321 including only a voice of a first speaker (or a first channel) and audio data 322 including only a voices of a second speaker (or a second channel). As illustrated in FIGS. 3, the characteristics of the audio data of aaa.mp3 and bbb.mp3 may be different.

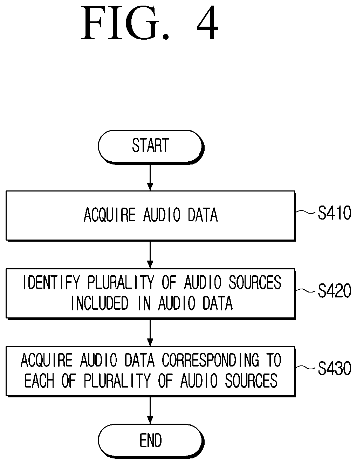

FIG. 4 is a flowchart illustrating an operation of acquiring the audio data corresponding to each of the plurality of audio sources.

Referring to FIG. 4, the electronic apparatus 100 may acquire the audio data (S410). The audio data may indicate information including audio or sound. The audio data may be referred to as an audio content, an audio file, or the like.

The electronic apparatus 100 may identify the plurality of audio sources included in the audio data (S420). The audio source may indicate a source of the audio signal. For example, the audio source of the user voice may be the user. In addition, the audio source of an exhaust sound of a car may be a car. The audio source may be referred to as a sound source, an audio object, an audio channel, or the like.

The electronic apparatus 100 may acquire the audio data corresponding to each of the plurality of audio sources (S430). The electronic apparatus 100 may acquire the audio data corresponding to the plurality of audio sources by analyzing the audio signal included in the audio data. For example, the electronic apparatus 100 may acquire the first audio data uttered by the first speaker (or the first channel) and the second audio data uttered by the second speaker (or the second channel) based on one audio data.

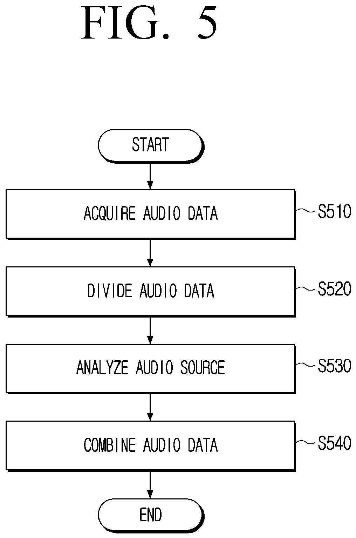

FIG. 5 is a flowchart illustrating an operation of analyzing the audio source by dividing the audio data.

Referring to FIG. 5, the electronic apparatus 100 may acquire the audio data (S510). The electronic apparatus 100 may then divide the audio data (S520). The analysis accuracy may be lower in case that the plurality of audio sources are combined with each other in one audio data. Therefore, the electronic apparatus 100 may divide the audio data into a plurality of pieces to analyze the audio source in detail.

The electronic apparatus 100 may analyze (or identify) the audio source based on the divided audio data (S530). According to an example embodiment, the electronic apparatus 100 may analyze each of the divided audio data and identify the audio source based on the analysis. According to an example embodiment, identifying the audio source may include, but is not limited to, determining a source of the audio. For example, the electronic apparatus 100 may identify a person or an object creating the audio or the sound.

After completing the analysis operation, the electronic apparatus 100 may combine the divided audio data into one audio data (S540). The electronic apparatus 100 may determine the audio source based on the divided audio data, and perform the combination operation to make the audio data into one data format.

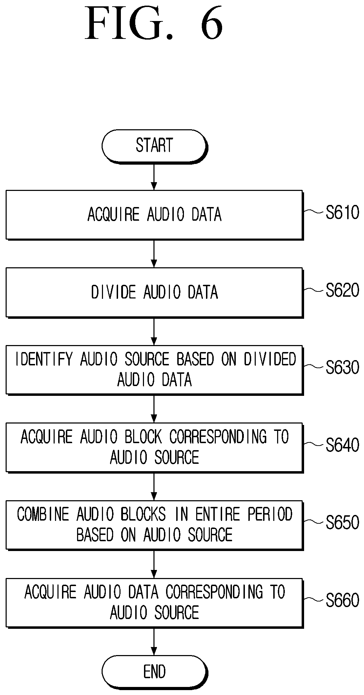

FIG. 6 is a flowchart illustrating an operation of acquiring the audio data corresponding to the audio source by combining audio blocks with each other.

Referring to FIG. 6, the electronic apparatus 100 may acquire the audio data (S610). The electronic apparatus 100 may divide the audio data (S620). The electronic apparatus 100 may identify the audio source based on the divided audio data (S630). The electronic apparatus 100 may analyze the audio signal by analyzing each of the divided audio data, and identify at least one audio source based on an analysis result.

The electronic apparatus 100 may acquire the audio block corresponding to the audio source based on each of the divided audio data (S640). For example, the electronic apparatus 100 may divide audio data of 10 seconds into 10 audio data in units of one second. However, the disclosure is not limited thereto, and as such, according to another example embodiment, the audio data may have duration different that 10 seconds and/or the audio data may be divided in units different than one second. The electronic apparatus 100 may acquire the audio blocks for each audio source from the first divided data in units of one second. The electronic apparatus 100 may determine which audio source each of the plurality of audio blocks corresponds to.

The electronic apparatus 100 may combine the audio blocks with each other in the entire period based on the audio source (S650). For example, the electronic apparatus 100 may combine the plurality of audio blocks acquired from each audio data in the units of one second over a period of 10 seconds (S650).

The electronic apparatus 100 may acquire the audio data corresponding to the audio source (S660). In a scenario, in which, there are two audio sources, the electronic apparatus 100 may acquire two audio data. For example, the electronic apparatus 100 may acquire the first audio data of 10 seconds uttered by the first speaker (or the first channel) and the second audio data of 10 seconds uttered by the second speaker (or the second channel).

FIGS. 7 are view for illustrating an operation of dividing the audio data to divide the plurality of audio sources from each other.

According to an example embodiment, in FIG. 7, item 710 shows the audio block corresponding to each of the plurality of audio sources (e.g., audio source 1, audio source 2, audio source 3, and audio source 4). However, the disclosure is not limited thereto, and as such, a different number of audio sources may be provided. For example, item 710 shows that the first audio source 1 outputs audio from zero seconds to 3 seconds, the second audio source 2 outputs audio from 2 seconds to 5 seconds, the third audio source 3 outputs audio from 4 seconds to 8 seconds and the fourth audio source 4 outputs audio from zero seconds to 2 seconds, and from 6.5 seconds to 8 seconds.

In FIG. 7, table 720 shows a process of dividing the audio data in item 710. It may be assumed that the original audio data is 8 seconds, but the disclosure is not limited thereto. The electronic apparatus 100 may identify four audio sources in the entire period of zero seconds to 8 seconds. In case that it is difficult to divide the four audio sources in one analysis, the electronic apparatus 100 may perform the classification operation.

Therefore, the electronic apparatus 100 may divide the audio data of 8 seconds into units of 4 seconds (first classification step (or operation)). The electronic apparatus 100 may acquire the audio data corresponding to a first group of zero seconds to 4 seconds and the audio data corresponding to a second group of 4 seconds to 8 seconds. The electronic apparatus 100 may identify three audio sources in a period of zero seconds to 4 seconds and three audio sources in a period of 4 seconds to 8 seconds. In case that it is difficult to divide the three audio sources in one analysis, the electronic apparatus 100 may perform an additional classification operation.

Accordingly, the electronic apparatus 100 may divide the audio data of 4 seconds into units of 2 seconds (second classification (or operation)). The electronic apparatus 100 may acquire the audio data corresponding to a 1-1-th group of zero seconds to 2 seconds, the audio data corresponding to a 1-2-th group of 2 seconds to 4 seconds, the audio data corresponding to a 2-1-th group of 4 seconds to 6 seconds, and the audio data corresponding to a 2-2-th group of 6 seconds to 8 seconds. The electronic apparatus 100 may identify two audio sources in a period of zero seconds to 2 seconds, identify two audio sources in a period of 2 seconds to 4 seconds, identify two audio sources in a period of 4 seconds to 6 seconds, and identify two audio sources in a period of 6 seconds to 8 seconds. In case that two audio sources may be divided in one analysis, the electronic apparatus 100 may not perform any additional classification operation.

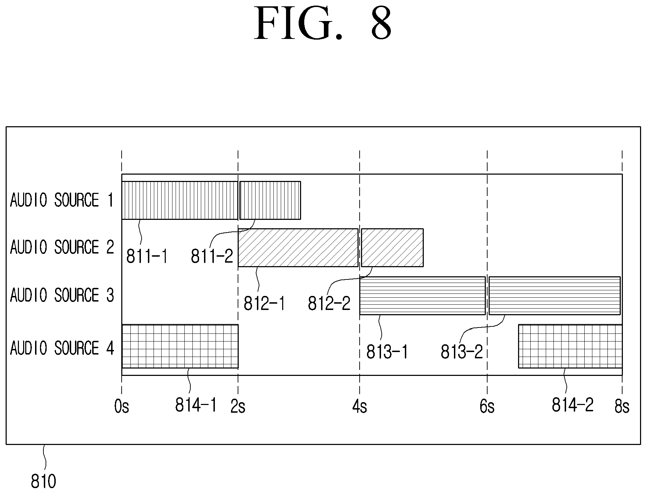

FIG. 8 is a view for illustrating the divided audio block.

Referring to item 810 of FIG. 8, the electronic apparatus 100 may acquire the audio block divided based on the audio source from the divided audio data.

The electronic apparatus 100 may acquire an audio block 811-1 corresponding to the first audio source 1 in a period of zero seconds to 2 seconds, and an audio block 811-2 corresponding to the first audio source 1 in a period of 2 seconds to 4 seconds.

The electronic apparatus 100 may acquire an audio block 812-1 corresponding to the second audio source 2 in a period of 2 seconds to 4 seconds, and an audio block 812-2 corresponding to the second audio source 2 in a period of 4 seconds to 6 seconds.

The electronic apparatus 100 may acquire an audio block 813-1 corresponding to the third audio source 3 in a period of 4 seconds to 6 seconds, and an audio block 813-2 corresponding to the third audio source 3 in a period of 6 seconds to 8 seconds.

The electronic apparatus 100 may acquire an audio block 814-1 corresponding to the fourth audio source 4 in a period of zero seconds to 2 seconds, and an audio block 814-2 corresponding to the fourth audio source 4 in a period of 6 seconds to 8 seconds.

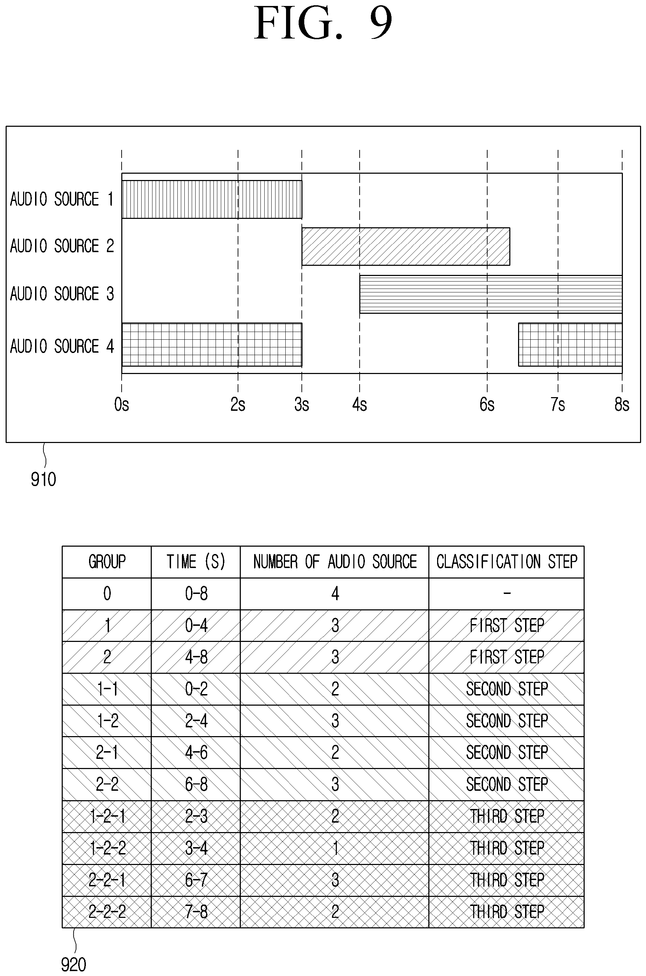

FIG. 9 is a view for illustrating an operation of dividing the audio data until a predetermined number of audio sources are identified.

In FIG. 9, Item 910 shows the audio block corresponding to each of the plurality of audio sources (e.g., audio source 1, audio source 2, audio source 3, and audio source 4). According to an example embodiment, item 910 shows that the first audio source 1 outputs audio from zero seconds to 3 seconds, the second audio source 2 outputs audio from 3 seconds to 6.2 seconds, the third audio source 3 outputs audio from 4 seconds to 8 seconds and the fourth audio source 4 outputs audio from zero seconds to 3 seconds, and from 6.5 seconds to 8 seconds.

According to an example embodiment, table 920 of FIG. 9 shows a process of dividing the audio data in item 910. It may be assumed that the original audio data is 8 seconds. The electronic apparatus 100 may identify four audio sources in the entire period of zero seconds to 8 seconds. In case that it is difficult to divide the four audio sources in one analysis, the electronic apparatus 100 may perform the classification operation.

Accordingly, the electronic apparatus 100 may divide the audio data of 8 seconds into units of 4 seconds (first classification step). The electronic apparatus 100 may acquire the audio data corresponding to a first group of zero seconds to 4 seconds and the audio data corresponding to a second group of 4 seconds to 8 seconds. The electronic apparatus 100 may identify three audio sources in a period of zero seconds to 4 seconds and three audio sources in a period of 4 seconds to 8 seconds. In case that it is difficult to divide the three audio sources in one analysis, the electronic apparatus 100 may perform an additional classification operation.

Accordingly, the electronic apparatus 100 may divide the audio data of 4 seconds into units of 2 seconds (second classification step). The electronic apparatus 100 may acquire the audio data corresponding to a 1-1-th group of zero seconds to 2 seconds, the audio data corresponding to a 1-2-th group of 2 seconds to 4 seconds, the audio data corresponding to a 2-1-th group of 4 seconds to 6 seconds, and the audio data corresponding to a 2-2-th group of 6 seconds to 8 seconds. The electronic apparatus 100 may identify two audio sources in a period of zero seconds to 2 seconds, identify three audio sources in a period of 2 seconds to 4 seconds, identify two audio sources in a period of 4 seconds to 6 seconds, and identify three audio sources in a period of 6 seconds to 8 seconds. In case that two audio sources may be divided in one analysis, the electronic apparatus 100 may not perform any additional classification operation. In case that it is difficult to divide the three audio sources in one analysis, the electronic apparatus 100 may perform an additional classification operation.

Accordingly, the electronic apparatus 100 may divide the audio data of 2 seconds into units of 1 second (third classification step). The electronic apparatus 100 may acquire the audio data corresponding to a 1-2-1-th group of 2 seconds to 3 seconds, the audio data corresponding to a 1-2-2-th group of 3 seconds to 4 seconds, the audio data corresponding to a 2-2-1-th group of 6 seconds to 7 seconds, and the audio data corresponding to a 2-2-2-th group of 7 seconds to 8 seconds. The electronic apparatus 100 may identify two audio sources in a period of 2 seconds to 3 seconds, identify two audio sources in a period of 3 seconds to 4 seconds, identify two audio sources in a period of 6 seconds to 7 seconds, and identify two audio sources in a period of 7 seconds to 8 seconds. In case that two audio sources may be divided in one analysis, the electronic apparatus 100 may not perform any additional classification operation.

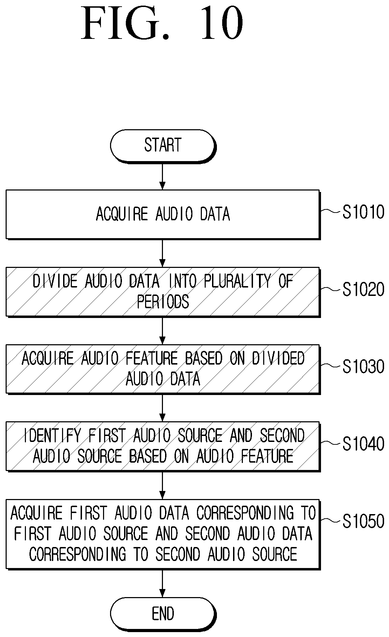

FIG. 10 is a flowchart illustrating an operation of acquiring the audio data corresponding to each of the plurality of audio sources.

Referring to FIG. 10, the electronic apparatus 100 may acquire the audio data (S1010). The description provides the detailed description of the audio data with reference to FIG. 4, and thus omits redundant descriptions thereof.

The electronic apparatus 100 may divide the audio data into the plurality of periods (S1020). The electronic apparatus 100 may divide the entire audio data into the plurality of periods based on the predetermined unit time. The divided audio data may be referred to as the divided data. The predetermined unit time may be changed based on the user setting. However, the disclosure is not limited thereto, and as such, the unit time may be determine another manner.

The electronic apparatus 100 may acquire the audio feature based on the divided audio data (S1030). The electronic apparatus 100 may extract the feature of the audio signal included in the audio data. The audio features may include the waveform, frequency, amplitude, or the like of the audio signal.

The electronic apparatus 100 may identify the first audio source and the second audio source based on the audio feature (S1040). It may be assumed that the audio data (or divided audio data) to be analyzed includes the audio signals output through the plurality of audio sources. The electronic apparatus 100 may identify the first audio source and the second audio source based on the audio feature.

The electronic apparatus 100 may acquire the first audio data corresponding to the first audio source and the second audio data corresponding to the second audio source (S1050). The electronic apparatus 100 may acquire the audio data corresponding to each audio source from one audio data in which the audio signals output from the plurality of audio sources are combined with each other. The electronic apparatus 100 may acquire one audio data by combining the first audio data corresponding to the first audio source and the second audio data corresponding to the second audio source with each other. The acquired audio data may be the same as/similar to the audio data acquired in the first operation S1010.

For example, the electronic apparatus 100 may separate first audio data uttered by the first speaker and second audio data uttered by the second speaker from one audio signal. The first audio data may be acquired in case that the first audio data and the second audio data are combined with each other.

FIG. 11 is a flowchart illustrating an operation of dividing the audio data by identifying the number of audio sources.

Operations S1110, S1130, S1140 and S1135 of FIG. 11 may each correspond to operations S1010, S1030, S1040, and S150 of FIG. 10. Therefore, the description omits redundant descriptions thereof.

After acquiring the audio data, the electronic apparatus 100 may identify the number of audio sources (S1121). The electronic apparatus 100 may identify the number of audio sources by using the first artificial intelligence model. The electronic apparatus 100 may identify whether the number of audio sources is less than the threshold number (S1122). The threshold number may indicate a limit value required to accurately analyze the audio source. The electronic apparatus 100 may have difficulty in analyzing the audio data that includes the audio sources of the threshold number or more.

In case that the number of audio sources is not less than the threshold number (S1122-N), the electronic apparatus 100 may divide the audio data into the plurality of periods (S1123). In case that the number of audio sources is greater than or equal to the threshold number, the electronic apparatus 100 may determine that it is difficult to analyze the audio data. Accordingly, the electronic apparatus 100 may divide the audio data. For example, the classification standard may be 50% of a total period. The electronic apparatus 100 may divide the audio data of 8 seconds into units of 4 seconds. The electronic apparatus 100 may then perform operations S1121 to S1122 again.

In case that the number of audio sources is less than the threshold number (S1122-Y), the electronic apparatus 100 may perform operations S1130 to S1150. In case that the number of audio sources is less than the threshold number, the electronic apparatus 100 may determine that the audio source may be accurately identified. The electronic apparatus 100 may analyze the audio data by using the second artificial intelligence model. In detail, the electronic apparatus 100 may input the divided audio data into the second artificial intelligence model. The electronic apparatus 100 may then acquire the audio data for each audio source from the second artificial intelligence model.

FIG. 12 is a flowchart for illustrating an operation considering a minimum time of the audio data to be divided.

Operations S1210, S1221, S1222, S1223, S1230, S1240, and S1250 of FIG. 12 may each correspond to operations S1110, S1121, S1122, S1123, S1130, S1140, and S1150 of FIG. 11. Therefore, the description omits redundant descriptions thereof.

After acquiring the audio data, the electronic apparatus 100 may identify whether the time of the audio data is less than the threshold time (S1220). According to an example embodiment, the time of audio data may correspond to a duration of the audio data. The threshold time may indicate a limited time required to analyze the audio feature. The electronic apparatus 100 may have difficulty in analyzing the audio data that includes the audio signals less than the threshold time. According to an example embodiment, the threshold time may only indicate the time used to prohibit the classification, and the electronic apparatus 100 may analyze the audio signal less than the threshold time.

In case that the time of the audio data (or divided audio data) is less than the threshold time (S1220-Y), the electronic apparatus 100 may perform operations S1230 to S1250. In case that the time of the audio data (or divided audio data) is less than the threshold time, the electronic apparatus 100 may immediately acquire the audio feature without performing any additional classification operation.

In case that the time of the audio data (or divided audio data) is not less than the threshold time (S1220-N), the electronic apparatus 100 may perform operations S1221 to S1223 and operations S1230 to S1250.

FIG. 13 is a flowchart illustrating an operation of performing no analysis when the number of audio sources is beyond an acceptable range.

Operations S1310, S1321, S1322, S1323, S1330, S1340, and S1350 of FIG. 13 may each correspond to operations S1210, S1221, S1222, S1223, S1230, S1240, and S1250 of FIG. 12. Therefore, the description omits redundant descriptions thereof.

After acquiring the audio data, the electronic apparatus 100 may identify whether the time of the audio data is less than the threshold time (S1320).

In case that the time of the audio data is not less than the threshold time (S1320-N), the electronic apparatus 100 may identify the number of audio sources (S1321). The electronic apparatus 100 may identify whether the number of audio sources is less than a first threshold number (S1322). In case that the number of audio sources is less than the first threshold number (S1322-Y), the electronic apparatus 100 may perform operations S1330 to S1350. In case that the number of audio sources is not less than the first threshold number (S1322-N), the electronic apparatus 100 may divide the audio data into the plurality of periods (S1323) and then repeat operations S1320 to S1322.

FIG. 12 shows an example of immediately acquiring the audio feature when the time of the audio data is less than the threshold time.

In various examples, in case that the time of the audio data is less than the threshold time (S1320-Y), the electronic apparatus 100 may identify the number of audio sources (S1320-2). The electronic apparatus 100 may identify whether the audio source is less than a second threshold number (S1320-3).

In case that the audio source is less than the second threshold number (S1320-3-Y), the electronic apparatus 100 may perform operations S1330 to S1350. In case that the audio source is not less than the second threshold number (S1320-3-N), the electronic apparatus 100 may not identify the audio source. The reason is that the analysis may have the lower accuracy in case that the audio data includes more audio sources than an allowable number. Accordingly, the electronic apparatus 100 may perform no audio source identification operation for the corresponding portion.

In various examples, the second threshold number may be greater than the first threshold number. The first threshold number may be a value for determining whether to analyze the audio source in the audio data of an appropriate (or relatively long) time period. The second threshold number may be a value for determining whether to analyze the audio source in the audio data of an inappropriate (or relatively short) time period. Accordingly, the first threshold number may be greater than the second threshold number. In case of requiring an accurate audio analysis operation, the electronic apparatus 100 may set the first threshold number to be greater than the second threshold number.

In various examples, the first threshold number may be smaller than the second threshold number. The audio data determined through the second threshold number may be the audio data having the relatively short time period. Any additional classification operation may not be possible for the audio data having the shorter time period. Therefore, the electronic apparatus 100 may acquire the analysis result by increasing an allowable threshold value. Accordingly, the second threshold number may be greater than the first threshold number. In case of requiring the audio analysis operation in which acquiring result data is important, the electronic apparatus 100 may set the first threshold number smaller than the second threshold number.

In various examples, the first threshold number and the second threshold number may be equally applied. In a general situation, the electronic apparatus 100 may consistently apply the threshold number used to analyze the audio source. Regardless of the time period of the audio data, the number of audio sources may be an important factor in acquiring the audio feature. Accordingly, the electronic apparatus 100 may equally apply the first threshold number and the second threshold number. In case that the audio analysis operation requiring the consistent performance is required in identifying the audio source, the electronic apparatus 100 may equally set the first threshold number and the second threshold number.

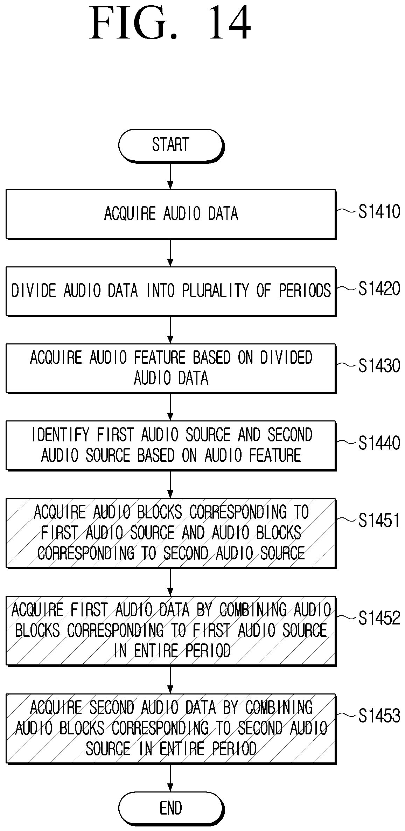

FIG. 14 is a flowchart illustrating an operation of acquiring the audio data corresponding to the audio source by combining the audio blocks with each other.

Operations S1410, S1420, S1430, and S1440 of FIG. 14 may each correspond to operations S1010, S1020, S1030, and S1040 of FIG. 10. Therefore, the description omits redundant descriptions thereof. After identifying the first audio source and the second audio source based on the audio feature, the electronic apparatus 100 may acquire the audio blocks corresponding to the first audio source and audio blocks corresponding to the second audio source (S1451).

The electronic apparatus 100 may acquire the audio block for each audio source based on each of the divided audio data.

The electronic apparatus 100 may acquire the first audio data by combining the audio blocks corresponding to the first audio source in the entire period (or the entire time period) of the audio data (S1452). The electronic apparatus 100 may combine the audio blocks related to the first audio source among the plurality of audio blocks acquired from each of the divided audio data into one data (or the first audio data).

The electronic apparatus 100 may acquire the second audio data by combining the audio blocks corresponding to the second audio source in the entire period (or the entire time period) of the audio data (S1453). The electronic apparatus 100 may combine the audio blocks related to the second audio source among the plurality of audio blocks acquired from each of the divided audio data into one data (or the second audio data).

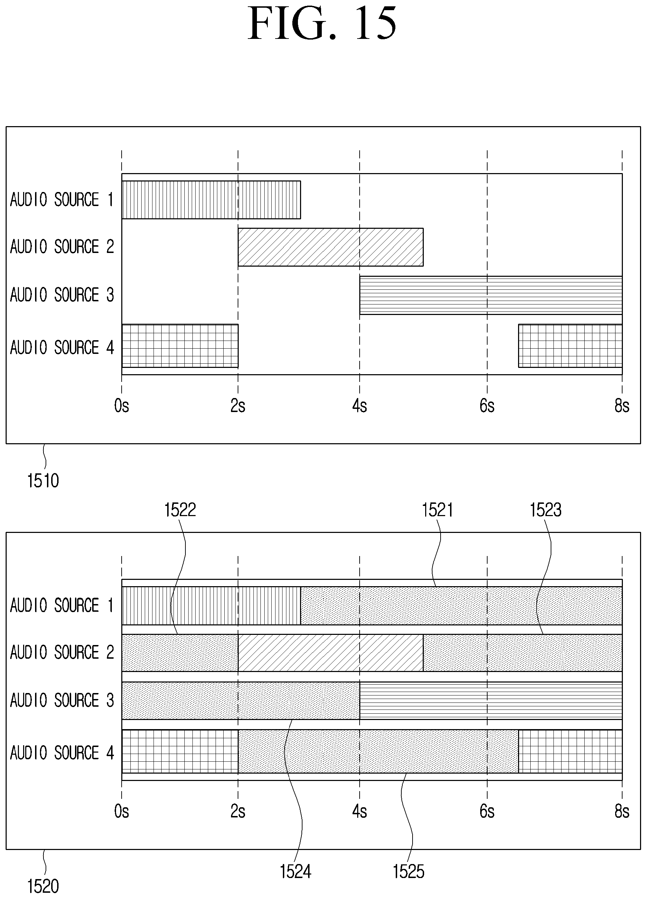

FIG. 15 is a flowchart showing an operation of adding a silent block in acquiring the audio data.

According to an example embodiment, in FIG. 15, item 1510 shows data acquired by combining the plurality of blocks mentioned in item 810 in FIG. 8 based the audio source. The electronic apparatus 100 may acquire the plurality of audio blocks from the divided audio data, and may acquire the audio feature based on each audio block. In addition, the electronic apparatus 100 may identify the audio source based on the audio feature.

The electronic apparatus 100 may identify four audio sources in item 810. The electronic apparatus 100 may then combine the audio block corresponding to each of the four audio sources into one data. For example, the electronic apparatus 100 may combine the audio blocks corresponding to the first audio source among the plurality of audio blocks into one data 1511. The electronic apparatus 100 may combine the audio blocks corresponding to the second audio source among the plurality of audio blocks into one data 1512. The electronic apparatus 100 may combine the audio blocks corresponding to the third audio source among the plurality of audio blocks into one data 1513. The electronic apparatus 100 may combine the audio blocks corresponding to the fourth audio source among the plurality of audio blocks into one data 1514. The data 1514 may be one data, except that the time is divided into zero seconds to 2 seconds and 6.5 seconds to 8 seconds. The data 1514 may be data in which the audio signal is not recognized between 2 seconds and 6.5 seconds.

In FIG. 15, item 1520 illustrates an operation of the electronic apparatus 100 according to an example embodiment, in which, the electronic apparatus 100 may add the silent block (or a silent signal 1521, 1522, 1523, 1524 or 1525) to a time period in which the audio signal is not recognized. For example, the electronic apparatus 100 may add the silent block to a period of 2.5 seconds to 8 seconds in the first audio data. In addition, the electronic apparatus 100 may add the silent block to a period of zero seconds to 2 seconds and 4.5 seconds to 8 seconds in the second audio data. In addition, the electronic apparatus 100 may add the silent block to a period of zero seconds to 4 seconds in third audio data. In addition, the electronic apparatus 100 may add the silent block to a period of 2 seconds to 6.5 seconds in fourth audio data.

In case that the silent block is added, the first to fourth audio data may include the audio signals corresponding to zero seconds to 8 seconds.

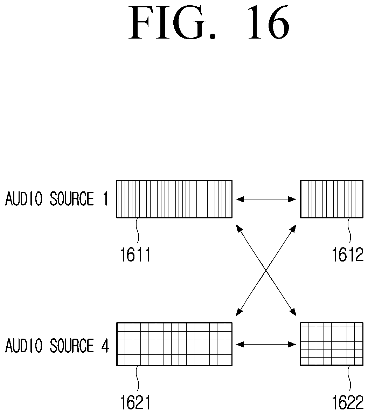

FIG. 16 is a flowchart for illustrating an operation of acquiring similarity between the audio blocks.

Referring to FIG. 16, it may be assumed that the electronic apparatus 100 acquires audio blocks 1611 and 1621 from the first divided data and acquires audio blocks 1612 and 1622 from the second divided data. The electronic apparatus 100 may combine the blocks having the same audio source with each other among the plurality of audio blocks.

The electronic apparatus 100 may determine whether to combine the audio blocks with each other based on the similarity. The electronic apparatus 100 may identify the similarity greater than or equal to the threshold value among the similarities to be compared, and combine the audio blocks corresponding to the identified similarity with each other. In case that there are the plurality of similarities greater than or equal to the threshold value, the electronic apparatus 100 may combine the audio blocks corresponding to the highest similarity with each other.

The electronic apparatus 100 may determine whether the audio block 1611 acquired from the first divided data may be combined with one of the audio block 1612 and the audio block 1622 that are acquired from the second divided data. The electronic apparatus 100 may acquire similarity between the audio block 1611 and the audio block 1612. The electronic apparatus 100 may acquire similarity between the audio block 1611 and the audio block 1622. In case that the similarity is greater than or equal to the threshold value, the electronic apparatus 100 may identify a block corresponding to the same audio source. The electronic apparatus 100 may determine that the audio block 1611 and the audio block 1612 correspond to the same audio source.

The electronic apparatus 100 may determine whether the audio block 1621 acquired from the first divided data may be combined with one of the audio block 1612 and the audio block 1622 that are acquired from the second divided data. The electronic apparatus 100 may acquire the similarity between the audio block 1621 and the audio block 1612. The electronic apparatus 100 may acquire the similarity between the audio block 1621 and the audio block 1622. In case that the similarity is greater than or equal to the threshold value, the electronic apparatus 100 may identify the block corresponding to the same audio source. The electronic apparatus 100 may determine that the audio block 1621 and the audio block 1622 correspond to the same audio source.

In various examples, in case of identifying the audio block 1611 and the audio block 1612 as corresponding to the same audio source, the electronic apparatus 100 may not determine the similarity between the audio block 1621 and the audio block 1612. Through this operation, the electronic apparatus 100 may shorten the processing time.

FIG. 17 is a view for illustrating an operation of acquiring the audio data corresponding to each audio source by dividing the audio data.

In FIG. 17, item 1710 shows audio data 1711 including all the audio signals output from the plurality of audio sources. The electronic apparatus 100 may acquire the audio data 1711. For example, it may be assumed that the audio data includes the audio signal of 8 seconds.

In FIG. 17, item 1720 shows the audio data to be divided. The classification time point may be assumed to be 6 seconds. The reason why the classification time point is 6 seconds instead of 4 seconds, i.e. half of 8 seconds, is that the audio signal output from a new audio source is identified after 8 seconds. The audio data between zero seconds to 12 seconds may be divided into a first period of zero seconds to 6 seconds and a second period of 6 seconds to 12 seconds. Here, as the new audio source is output after 8 seconds, the data of the second period may be re-divided into a third period of 6 seconds to 8 seconds and a fourth period of 8 seconds to 10 seconds. In item 1720, the electronic apparatus 100 may acquire first divided data 1721 divided based on the period of zero seconds to 6 seconds and second divided data 1722 divided based on the period of 6 seconds to 8 seconds. In the illustration in FIG. 17, the classification time point may be 4 seconds instead of 6 seconds. However, the classification time point may be changed based on the user setting, and is not limited to a specific method.

In FIG. 17, item 1730 shows an operation of acquiring the plurality of audio blocks from the divided audio data and combining the same. The electronic apparatus 100 may acquire a first audio block 1731-1 and a second audio block 1731-2 having different audio sources from the first divided data 1721. The electronic apparatus 100 may acquire a third audio block 1732-1 and a fourth audio block 1732-2 having different audio sources from the second divided data 1722. The electronic apparatus 100 may acquire similarity between the plurality of acquired audio blocks. The electronic apparatus 100 may combine the audio blocks corresponding to the same audio source based on the similarity. The electronic apparatus 100 may acquire one first audio data 1731-3 by combining the audio blocks 1731-1 and 1731-2 corresponding to the first audio source. The electronic apparatus 100 may acquire one second audio data 1732-3 by combining the audio blocks 1732-1 and 1732-2 corresponding to the second audio source.

In FIG. 17, item 1740 shows one audio data 1741 including the first audio data 1731-3 and the second audio data 1732-3. The electronic apparatus 100 may acquire the audio data 1741 by combining the first audio data 1731-3 and the second audio data 1732-3. The audio data 1741 and the audio data 1711 may be the same as or similar to each other. Some calculation errors may occur in classification and synthesis processes, and accordingly, the audio data 1741 and the audio data 1711 may not be perfectly the same as each other.

FIG. 18 is a view for illustrating the overlapping region in the operation of acquiring the similarity.

The electronic apparatus 100 may divide the audio data based on the predetermined time. In addition, the electronic apparatus 100 may set the overlapping region based on the threshold time in the predetermined time. The overlapping region may indicate a region (or period) in which the audio data of a first time point and the audio data of a second time point following the first time point include the same audio signal in the plurality of divided audio data.

According to an example embodiment, in FIG. 18, item 1810 shows that the overlapping region may be a period before the threshold time (e.g., 0.1 seconds) from the predetermined time (e.g., units of 2 seconds). The electronic apparatus 100 may acquire four audio data in case of dividing a period of zero seconds to 8 seconds in the units of 2 seconds. In dividing the audio data, the electronic apparatus 100 may set the overlapping region from the predetermined time to a previous period (or range) by the threshold time. For example, the electronic apparatus 100 may acquire first divided data 1811 based on a period of zero seconds to 2 seconds, second divided data 1812 based on a period of 1.9 seconds to 4 seconds, third audio data 1813 based on a period of 3.9 seconds to 6 seconds, and fourth audio data 1814 based on a period of 5.9 seconds to 8 seconds.

The overlapping region of the first divided data and the second divided data may have a period of 1.9 seconds to 2 seconds. The overlapping region of the second divided data and the third audio data may be a period of 3.9 seconds to 4 seconds. The overlapping region of the third audio data and the fourth audio data may be a period of 5.9 seconds to 6 seconds. The overlapping region may be 0.1 seconds.

According to an example embodiment, in FIG. 18, item 1820 shows that the overlapping region may be a period before the threshold time (e.g., 0.1 seconds) and after the threshold time (e.g., 0.1 seconds) from the predetermined time (e.g., units of 2 seconds). The electronic apparatus 100 may acquire four audio data in case of dividing the period of zero seconds to 8 seconds in the units of 2 seconds. In dividing the audio data, the electronic apparatus 100 may set the overlapping region from the predetermined time to a period (or range) before the threshold time and a period (or range) after the threshold time. For example, the electronic apparatus 100 may acquire first divided data 1821 based on a period of zero seconds to 2.1 seconds, second divided data 1822 based on a period of 1.9 seconds to 4.1 seconds, third audio data 1823 based on a period of 3.9 seconds to 6.1 seconds, and fourth audio data 1824 based on a period of 5.9 seconds to 8 seconds.

The overlapping region of the first divided data and the second divided data may be a period of 1.9 seconds to 2.1 seconds. The overlapping region of the second divided data and the third audio data may be a period of 3.9 seconds to 4.1 seconds. The overlapping region of the third audio data and the fourth audio data may be a period of 5.9 seconds to 6.1 seconds. The overlapping region may be 0.2 seconds.

FIG. 19 is a view for illustrating an operation of combining the audio blocks with each other based on the similarity.

In FIG. 19, item 1910 shows audio data 1911 including all the audio signals output from the plurality of audio sources. The electronic apparatus 100 may acquire the audio data 1911. For example, it may be assumed that the audio data includes the audio signal of 8 seconds.

In FIG. 19, item 1920 shows the audio data to be divided. The classification time point may be assumed to be 6 seconds. The description describes the classification time point with reference to FIG. 17, and thus omits a detailed description thereof. The overlapping region may be a period before the threshold time (e.g., 0.1 seconds) and after the threshold time (e.g., 0.1 seconds) based on the classification time point. The electronic apparatus 100 may acquire first divided data 1921 divided based on a period of zero seconds to 6.1 seconds and second divided data 1922 divided based on a period of 5.9 seconds to 8 seconds.

The electronic apparatus 100 may set an overlapping region 1923 among the plurality of acquired audio blocks. The overlapping region 1923 may indicate a region that includes all audio data to be divided into two. The electronic apparatus 100 may perform the classification operation for the two audio data to be divided to all include the overlapping region. Accordingly, the first divided data 1921 and the second divided data 1922 may include the same overlapping region 1923.

In FIG. 19, item 1930 shows the operation of acquiring the plurality of audio blocks from the divided audio data and combining the same. The electronic apparatus 100 may acquire a first audio block 1931-1 and a second audio block 1931-2 having different audio sources from the first divided data 1921. The electronic apparatus 100 may acquire a third audio block 1932-1 and a fourth audio block 1932-2 having different audio sources from the second divided data 1922.

The electronic apparatus 100 may acquire similarity based on the overlapping regions 1923 of the acquired plurality of audio blocks. The first audio block 1931-1 may include an overlapping region 1933-1. The second audio block 1931-2 may include an overlapping region 1933-2. The third audio block 1932-1 may include an overlapping region 1935-1. The fourth audio block 1932-2 may include an overlapping region 1935-2.

The electronic apparatus 100 may compare the similarity between the overlapping region included in the first divided data and the overlapping region included in the second divided data.

The electronic apparatus 100 may acquire the similarity between the overlapping region 1933-1 and the overlapping region 1933-2. The electronic apparatus 100 may acquire the similarity between the overlapping regions 1933-1 and the overlapping region 1935-2. In addition, the electronic apparatus 100 may determine the audio block to be combined with the first audio block 1931-1 based on the acquired two similarities.

The electronic apparatus 100 may acquire the similarity between the overlapping region 1935-1 and the overlapping regions 1933-2. The electronic apparatus 100 may acquire the similarity between the overlapping region 1935-1 and the overlapping region 1935-2. In addition, the electronic apparatus 100 may determine the audio block to be combined with the second audio block 1932-1 based on the acquired two similarities.

The electronic apparatus 100 may combine the audio blocks corresponding to the same audio source based on the similarity. The electronic apparatus 100 may acquire one first audio data 1931-3 by combining the audio blocks 1931-1 and 1931-2 corresponding to the first audio source. The electronic apparatus 100 may acquire one second audio data 1932-3 by combining the audio blocks 1932-1 and 1932-2 corresponding to the second audio source.

In FIG. 19, item 1940 shows one audio data 1941 including the first audio data 1931-3 and the second audio data 1932-3. The electronic apparatus 100 may acquire the audio data 1941 by combining the first audio data 1931-3 and the second audio data 1932-3. The audio data 1941 and the audio data 1911 may be the same as or similar to each other. Some calculation errors may occur in the classification and synthesis processes, and accordingly, the audio data 1941 and the audio data 1911 may not be perfectly the same as each other.

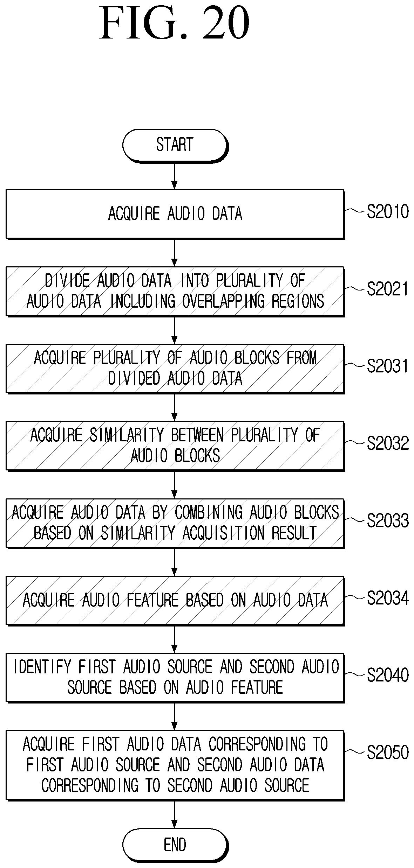

FIG. 20 is a flowchart for illustrating an operation of acquiring the similarity between the audio blocks.

Operations S2010, S2040, and S2050 of FIG. 20 may each correspond to operations S1010, S1040, and S1050 of FIG. 10. Therefore, the description omits redundant descriptions thereof.

After acquiring the audio data, the electronic apparatus 100 may divide the audio data into the plurality of audio data including the overlapping regions (S2021). As in item 1920 of FIG. 19, the two audio data to be divided may include the same overlapping region. All the audio data to be divided may not include the same overlapping region, and two audio data to be divided based on a specific time point may include the same overlapping region.

The electronic apparatus 100 may acquire the plurality of audio blocks from the divided audio data (S2031). The electronic apparatus 100 may divide the audio blocks determined to have different audio sources. In this operation, the electronic apparatus 100 may simply divide the audio signals determined to have different audio sources into separate blocks without specifying their audio sources. For example, as in item 1930 of FIG. 19, the first divided data 1921 may be divided into the first audio block 1931-1 and the second audio block 1932-1.

The electronic apparatus 100 may acquire the similarity between the plurality of audio blocks (S2032). The similarity may indicate the similarity between the overlapping regions. For example, as in item 1930 of FIG. 19, the electronic apparatus 100 may acquire the similarity between the overlapping region 1933-1 and the overlapping region 1933-2. In addition, the electronic apparatus 100 may acquire the similarity between the overlapping region 1933-1 and the overlapping region 1935-2.

The electronic apparatus 100 may acquire the audio data by combining the audio blocks based on similarity acquisition result (S2033). The electronic apparatus 100 may determine which blocks to be combined with each other based on the acquired similarity. The electronic apparatus 100 may combine the blocks determined to have the same audio source.

The electronic apparatus 100 may acquire the audio feature based on the audio data (S2034). The electronic apparatus 100 may acquire the audio feature based on the audio data in which at least one audio block is combined. For example, in item 1930 of FIG. 19, the electronic apparatus 100 may acquire the audio feature based on the first audio data 1931-3 in which the audio blocks 1931-1 and 1931-2 are combined with each other, and acquire the audio feature based on the second audio data 1932-3 in which the audio blocks 1932-1 and 1932-2 are combined with each other.

The electronic apparatus 100 may then perform operations S2040 to S2050. The electronic apparatus 100 may identify the audio source corresponding to each audio data. The electronic apparatus 100 may simply acquire a result that the first audio data 1931-3 and the second audio data 1932-3 have different audio sources. In addition, the electronic apparatus 100 may acquire a result that the first audio data 1931-3 is output from a specific audio source (e.g., a male person), and the second audio data 1932-3 is output from a specific audio source (e.g., a female person).

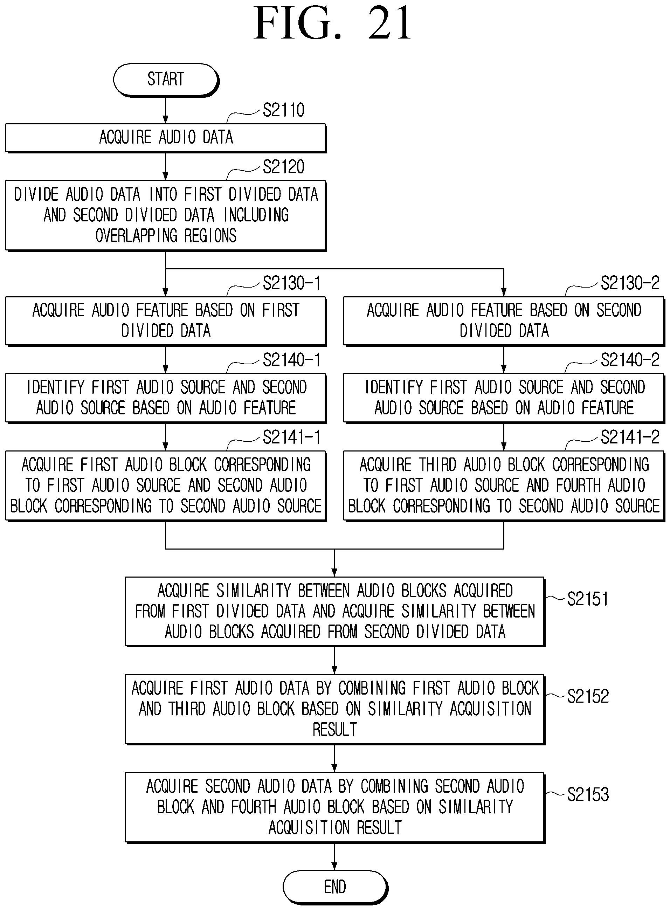

FIG. 21 is a flowchart for illustrating a specific example of the operation of acquiring the similarity between the audio blocks.

Referring to FIG. 21, the electronic apparatus 100 may acquire the audio data (S2110). The electronic apparatus 100 may then divide the audio data into the first divided data and the second divided data including the overlapping regions (S2120).

The electronic apparatus 100 may acquire the audio feature based on the first divided data (S2130-1). The electronic apparatus 100 may identify the first audio source and the second audio source based on the audio feature (S2140-1). The electronic apparatus 100 may acquire the first audio block corresponding to the first audio source and the second audio block corresponding to the second audio source (S2141-1).

The electronic apparatus 100 may acquire the audio feature based on the second divided data (S2130-2). The electronic apparatus 100 may identify the first audio source and the second audio source based on the audio feature (S2140-2). The electronic apparatus 100 may acquire the third audio block corresponding to the first audio source and the fourth audio block corresponding to the second audio source (S2141-2).

The electronic apparatus 100 may acquire the similarity between the audio blocks (e.g., first audio block and second audio block) acquired from the first divided data and acquire the similarity between the audio blocks (e.g., third audio block and fourth audio block) acquired from the second divided data (S2151).

The electronic apparatus 100 may acquire the first audio data by combining the first audio block and the third audio block based on the similarity acquisition result (S2152). The electronic apparatus 100 may acquire the second audio data by combining the second audio block and the fourth audio block based on the similarity acquisition result (S2153).

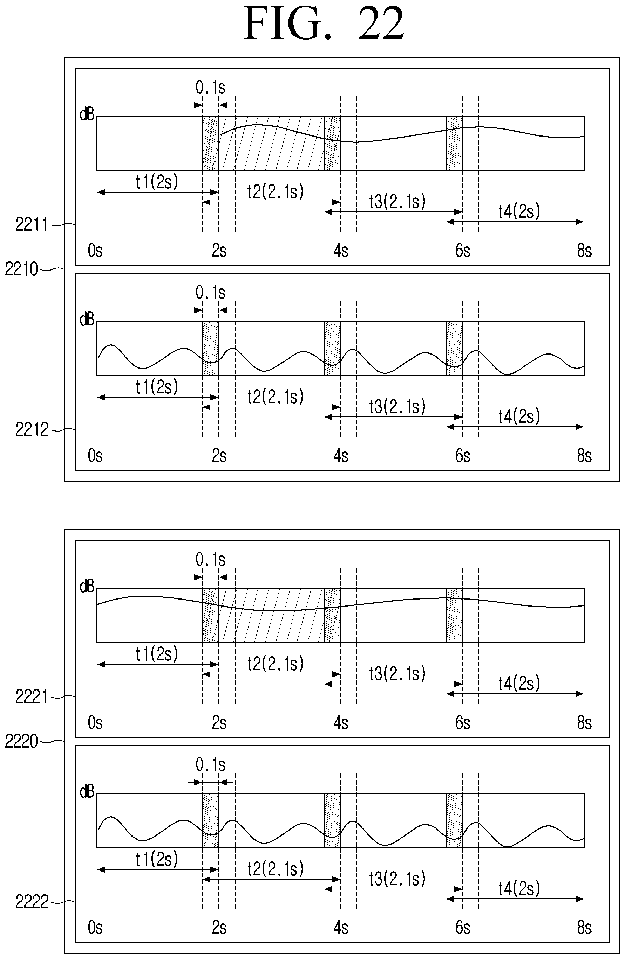

FIG. 22 is a view for illustrating an operation of analyzing the audio block in various examples.

In FIG. 22, item 2210 shows audio signals output from different audio sources. For example, graph 2211 shows an audio signal output from a first audio source, and graph 2212 shows an audio signal output from a second audio source. Moreover, graph 2211 shows that the first audio source outputs the audio signal from 2 seconds to 8 seconds, and graph 2212 shows that the second audio source outputs the audio signal from zero seconds to 8 seconds.

In FIG. 22, item 2220 shows audio signals output from different audio sources. For example, graph 2221 shows an audio signal output from the first audio source, and graph 2222 shows an audio signal output from the second audio source. Moreover, graph 2221 shows that the first audio source outputs the audio signal from zero seconds to 8 seconds, and graph 2222 shows that the second audio source outputs the audio signal from zero seconds to 8 seconds.

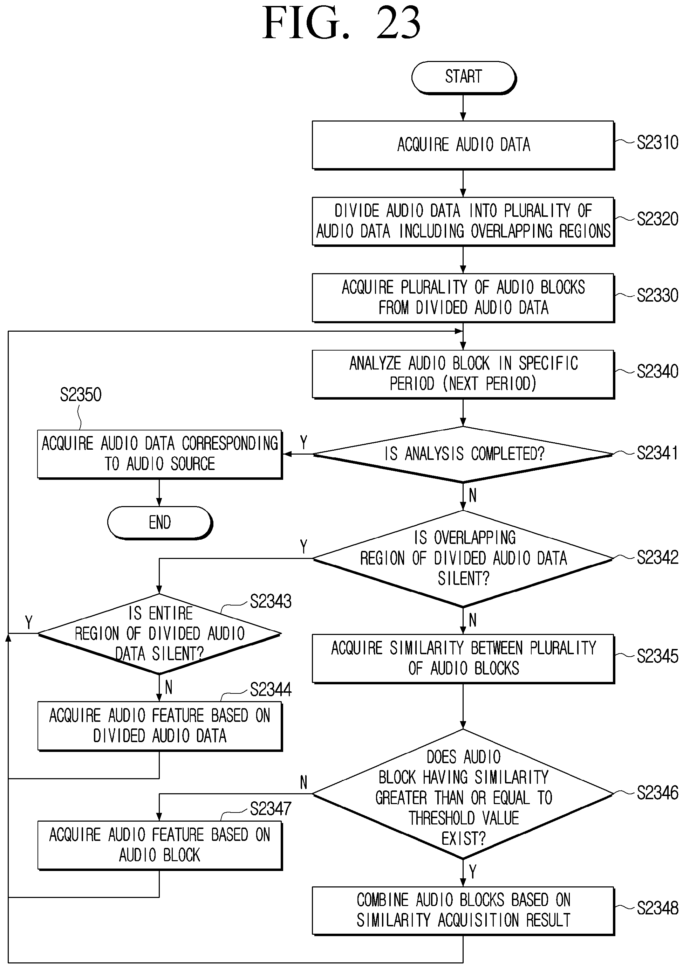

FIG. 23 is a flowchart illustrating an operation of analyzing the audio feature based on whether the overlapping region is silent.

Referring to FIG. 23, the electronic apparatus 100 may acquire the audio data (S2310). The electronic apparatus 100 may divide the audio data into the plurality of audio data including the overlapping regions (S2320). The electronic apparatus 100 may acquire the plurality of audio blocks from the divided audio data (S2330). The electronic apparatus 100 may analyze the audio block in a specific period (S2340).

The electronic apparatus 100 may determine whether the analysis of the audio data is completed (S2341). The electronic apparatus 100 may determine whether the analysis is completed for the entire time period of the audio data before being divided. In case that the analysis is completed (S2341-Y), the electronic apparatus 100 may acquire the audio data corresponding to the audio source (S2350).

In case that the analysis is not completed (S2341-N), the electronic apparatus 100 may determine whether the overlapping region of the divided audio data is silent (S2342).

In case that the overlapping region is silent (S2342-Y), the electronic apparatus 100 may identify whether an entire region of the divided audio data is silent (S2343). In case that the entire region of the divided audio data is not silent (S2343-N), the electronic apparatus 100 may acquire the audio feature based on the divided audio data (S2344). Operation S2344 may be an operation performed in case that it is determined that there is no connected audio signal because the overlapping region is silent. In case that the overlapping region is silent and a region other than the overlapping region is not silent, the electronic apparatus 100 may determine that the divided audio data is independent audio data. In addition, the electronic apparatus 100 may analyze the audio block in a next period (S2340). The electronic apparatus 100 may then repeat operations S2341 to S2350.

In case that the entire region of the divided audio data is silent (S2343-Y), the electronic apparatus 100 may analyze the audio block in the next period (S2340). The electronic apparatus 100 may then repeat operations S2341 to S2350.

In case that the overlapping region is not silent (S2342-N), the electronic apparatus 100 may acquire the similarity between the plurality of audio blocks (S2345). The electronic apparatus 100 may identify whether the audio block having the similarity greater than or equal to the threshold value exists (S2346). In operation S2346, similarity comparison operation may be performed for all the audio blocks that may be combined with a specific audio block.

In case that there is no audio block having the similarity greater than or equal to the threshold value (S2346-N), the electronic apparatus 100 may acquire the audio feature based on a current target audio block (S2347). Operation S2347 may be performed in case that it is determined that there is no audio block connected to the current target audio block. In case that the overlapping region is not silent and there is no audio block whose similarity is greater than or equal to the threshold value, the electronic apparatus 100 may determine that the target audio block is an independent audio block. In addition, the electronic apparatus 100 may analyze the audio block in the next period (S2340). The electronic apparatus 100 may then repeat operations S2341 to S2350.

In case that there are the audio blocks having the similarity greater than or equal to the threshold value (S2346-Y), the electronic apparatus 100 may combine the audio blocks based on the similarity acquisition result (S2348). In addition, the electronic apparatus 100 may analyze the audio block in the next period (S2340). The electronic apparatus 100 may then repeat operations S2341 to S2350.

In the example of FIG. 23, the audio blocks having the similarity greater than or equal to the threshold value may be continuously combined with each other. In case that the similar audio blocks are repeatedly combined with each other for the entire time period and there are no more audio blocks to be combined with each other, the electronic apparatus 100 may acquire the audio feature to perform the analysis operation. A method of analyzing the audio data in which the audio blocks are combined with each other may be more accurate than a method of individually analyzing each audio block.

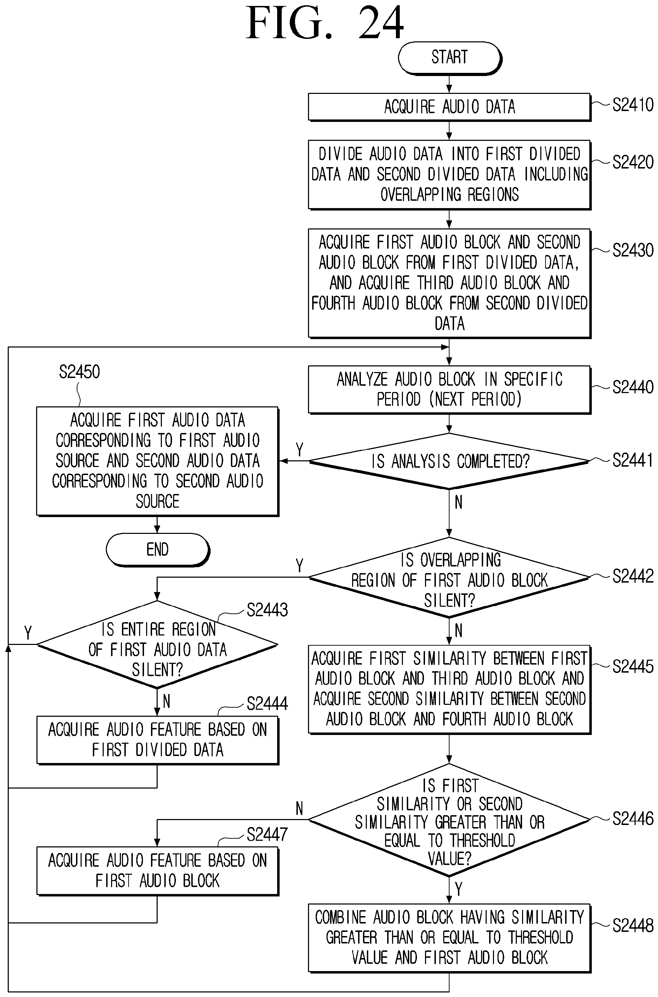

FIG. 24 is a flowchart illustrating a specific example of the operation of analyzing the audio feature based on whether the overlapping region is silent.

An example of FIG. 24 may correspond to the example of FIG. 23. Therefore, the description omits redundant descriptions thereof.

The electronic apparatus 100 may acquire the audio data (S2410). The electronic apparatus 100 may divide the audio data into the first divided data and the second divided data including the overlapping regions (S2420). The electronic apparatus 100 may acquire the first audio block and the second audio block from the first divided data, and acquire the third audio block and the fourth audio block from the second divided data (S2430). The electronic apparatus 100 may analyze the audio block in a specific period (S2440).

The electronic apparatus 100 may determine whether the analysis of the audio data is completed (S2441). The electronic apparatus 100 may determine whether the analysis is completed for the entire time period of the audio data before being divided. In case that the analysis is completed (S2441-Y), the electronic apparatus 100 may acquire the first audio data corresponding to the first audio source and the second audio data corresponding to the second audio source (S2450).

In case that the analysis is not completed (S2441-N), the electronic apparatus 100 may determine whether the overlapping region of the first audio block is silent (S2442).

In case that the overlapping region of the first audio block is silent (S2442-Y), the electronic apparatus 100 may identify whether an entire region of the first divided data is silent (S2443). In case that the entire region of the first divided data is not silent (S2443-N), the electronic apparatus 100 may acquire the audio feature based on the first divided data (S2444).

In case that the entire region of the divided audio data is silent (S2443-Y), the electronic apparatus 100 may analyze the audio block in the next period (S2440). The electronic apparatus 100 may then repeat operations S2441 to S2450.

In case that the overlapping region is not silent (S2442-N), the electronic apparatus 100 may acquire first similarity between the first audio block and the third audio block and acquire second similarity between the second audio block and the fourth audio block (S2445). The electronic apparatus 100 may identify whether the first similarity or the second similarity is greater than or equal to the threshold value (S2446). In operation S2446, the similarity comparison operation may be performed for all the audio blocks that may be combined with the specific audio block.

In case that none of the first similarity and the second similarity is greater than or equal to the threshold value (S2446-N), the electronic apparatus 100 may acquire the audio feature based on the first audio block (S2447). Operation S2447 may be performed in case that it is determined that there is no audio block connected to the current target audio block. In case that the overlapping region is not silent and there is no audio block whose similarity is greater than or equal to the threshold value, the electronic apparatus 100 may determine that the target audio block is the independent audio block. In addition, the electronic apparatus 100 may analyze the audio block in the next period (S2440). The electronic apparatus 100 may then repeat operations S2441 to S2450.

In case that the first similarity or the second similarity is greater than or equal to the threshold value (S2446-Y), the electronic apparatus 100 may combine the audio block (e.g., third audio block or fourth audio block) having the similarity greater than or equal to the threshold value and the first audio block with each other (S2448). In addition, the electronic apparatus 100 may analyze the audio block in the next period (S2440). The electronic apparatus 100 may then repeat operations S2441 to S2450.

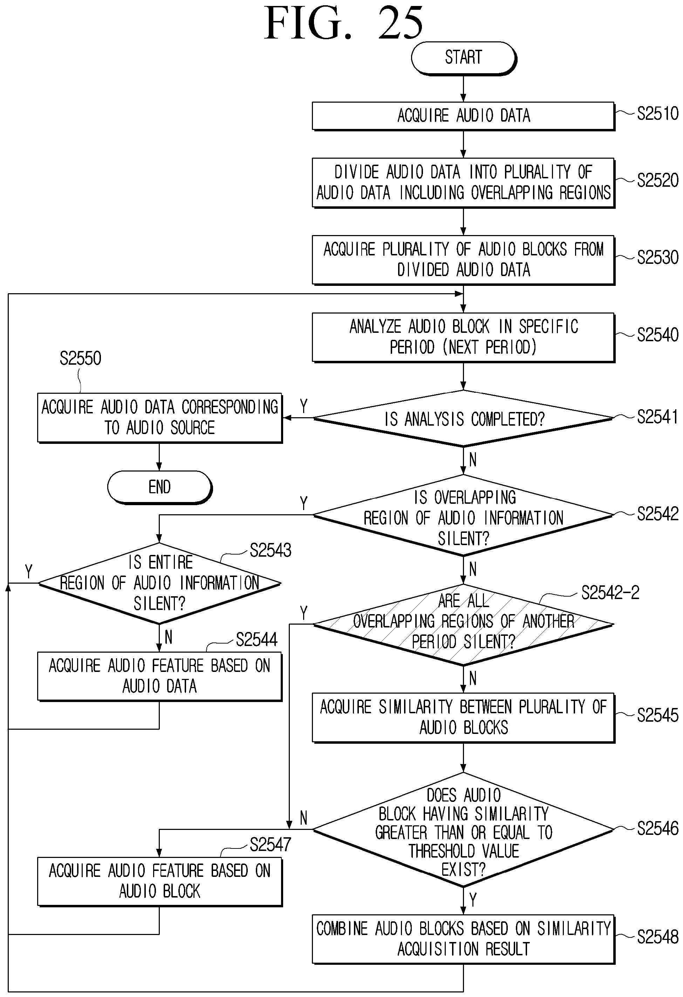

FIG. 25 is a flowchart illustrating an operation of analyzing the audio feature based on whether an overlapping region of another period is silent.

Operations S2510, S2525, S2530, S2540, S2541, S2542, S2543, S2544, S2545, S2546, S2547, and S2548 of FIG. 25 may each correspond to operations S2310, S2323, S2330, S2340, S2341, S2342, S2343, S2344, S2345, S2346, S2347, and S2348 of FIG. 23. Therefore, the description omits redundant descriptions thereof.

In case that the overlapping region of the audio data is not silent (S2542-N), the electronic apparatus 100 may identify whether all overlapping regions of another period are silent (S2542-2). The overlapping region of another period may indicate an overlapping region of a next period that is likely to be combined with the current target audio block.

In case that all the overlapping regions of another period are silent (S2542-2-Y), the electronic apparatus 100 may perform operation S2547.

In case that not all the overlapping regions of another period is silent (S2542-2-N), the electronic apparatus 100 may perform operations S2545 to S2548.

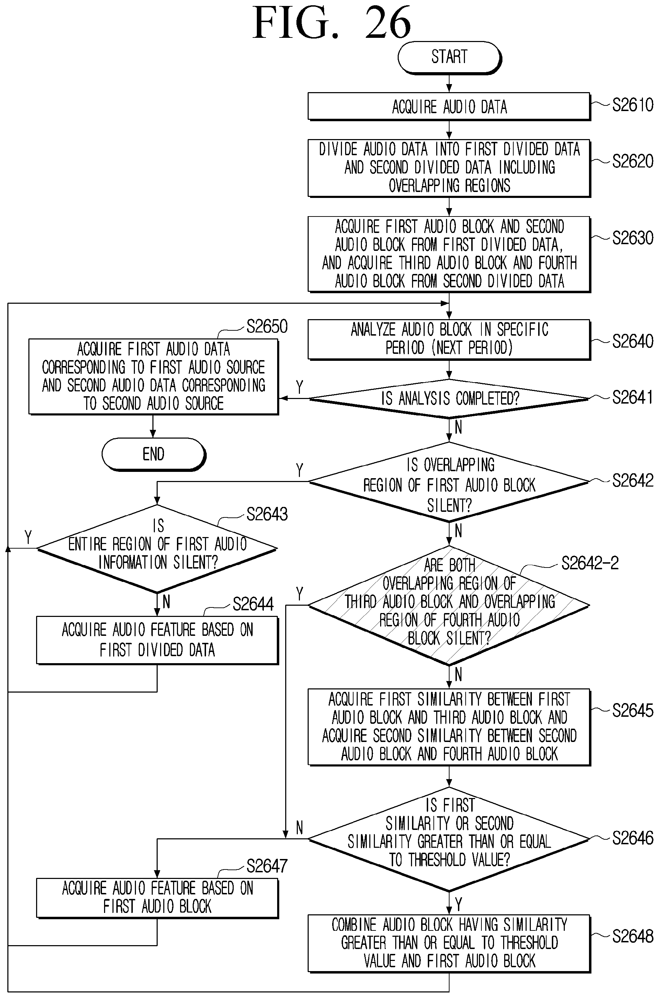

FIG. 26 is a flowchart illustrating a specific example of the operation of analyzing the audio feature based on whether the overlapping region of another period is silent.

Operations S2610, S2626, S2630, S2640, S2641, S2642, S2643, S2644, S2645, S2646, S2647, and S2648 of FIG. 26 may each correspond to operations S2410, S2424, S2430, S2440, S2441, S2442, S2443, S2444, S2445, S2446, S2447, and S2448 of FIG. 24. Therefore, the description omits redundant descriptions thereof.

In case that the overlapping region of the first audio block is not silent (S2642-N), the electronic apparatus 100 may identify whether both the overlapping region of the third audio block and the overlapping region of the fourth audio block are silent (S2642-2). The overlapping region of another period may indicate an overlapping region of the next period that is likely to be combined with the current target audio block.

For example, referring to item 1930 of FIG. 19, in case that the overlapping region 1933-1 of the target audio block 1931-1 is not silent, the electronic apparatus 100 may identify whether the overlapping region 1933-2 of the audio block 1931-2 of the next period and the overlapping region 1932-2 of the audio block 1932-2 are all silent.

In case that the overlapping region of the third audio block and the overlapping region of the fourth audio block are all silent (S2642-2-Y), the electronic apparatus 100 may perform operation S2647.

In case that not all the overlapping region of the third audio block and the overlapping region of the fourth audio block is silent (S2642-2-N), the electronic apparatus 100 may perform operations S2645 to S2648.

FIG. 27 is a flowchart illustrating an operation of increasing the overlapping region.

Operations S2710, S2727, S2730, S2740, S2741, S2742, S2743, S2744, S2745, S2747, and S2748 of FIG. 27 may each correspond to operations S2310, S2323, S2330, S2340, S2341, S2342, S2343, S2344, S2345, S2347, and S2348 of FIG. 23. Therefore, the description omits redundant descriptions thereof.

After acquiring the similarity between the plurality of audio blocks, the electronic apparatus 100 may identify whether the similarity is greater than or equal to the first threshold value (S2746-1).

In case that the similarity is greater than or equal to the first threshold value (S2746-1-Y), the electronic apparatus 100 may combine the audio blocks with each other based on the similarity acquisition result (S2748).

In case that the similarity is not greater than or equal to the first threshold value (S2746-1), the electronic apparatus 100 may identify whether the similarity is greater than or equal to the second threshold value (S2746-2-Y). In case that the similarity is not greater than or equal to the second threshold value (S2746-2-N), the electronic apparatus 100 may acquire the audio feature based on the audio block (S2747). In case that the similarity is greater than or equal to the second threshold value (S2746-2-Y), the electronic apparatus 100 may increase the overlapping region (S2746-3). In addition, the electronic apparatus 100 may re-perform the classification operation based on the increased overlapping region (S2720). The electronic apparatus 100 may then repeat operations S2730 to S2750.

The first threshold value may be greater than the second threshold value.

In case that the similarity is greater than or equal to the first threshold value, the electronic apparatus 100 may combine the audio blocks compared with each other to acquire the similarity.

In case that the similarity is less than the first threshold value and greater than or equal to the second threshold value, the electronic apparatus 100 may re-divide the audio data by increasing the overlapping region. This operation is to re-evaluate the similarity comparison by increasing the overlapping region.

In case that the similarity is less than the second threshold value, the electronic apparatus 100 may acquire the audio feature for the target audio block. The reason is that it is determined that there are no more audio blocks to be connected.

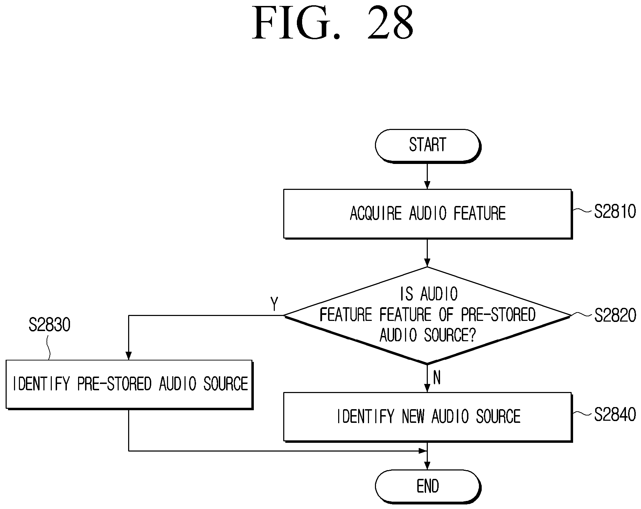

FIG. 28 is a flowchart for illustrating an operation of analyzing the audio feature.

Referring to FIG. 28, the electronic apparatus 100 may acquire the audio feature (S2810). In addition, the electronic apparatus 100 may identify whether the audio feature is a feature of a pre-stored audio source (S2820). The electronic apparatus 100 may store the audio feature related to at least one audio source. The electronic apparatus 100 may compare whether the acquired audio feature in operation S2810 is similar to a feature of the pre-stored audio source.

In case that the acquired audio feature is the feature of the pre-stored audio source (S2820-Y), the electronic apparatus 100 may identify the pre-stored audio source based on the audio feature (S2830). The electronic apparatus 100 may determine that the audio block (or audio data) having the acquired audio feature is output by the pre-stored audio source.

In case that the acquired audio feature is not the feature of the pre-stored audio source (S2820-N), the electronic apparatus 100 may identify a new audio source (S2840). The electronic apparatus 100 may determine that the audio block (or audio data) having the acquired audio feature is output by the new audio source. The electronic apparatus 100 may store information on the new audio source.

FIG. 29 is a view for illustrating an operation of determining whether the overlapping region is silent in various examples.

In FIG. 29, item 2910 shows audio data of a period of zero seconds to 8 seconds. The electronic apparatus 100 may acquire the peak value in the entire period of the audio data.

In FIG. 29, item 2920 shows the divided audio data. The electronic apparatus 100 may acquire the first divided data of a period of zero seconds to 6 seconds and the second divided data of a period of 6 seconds to 8 seconds by dividing the audio data of the period of zero seconds to 8 seconds. The electronic apparatus 100 may acquire a first average value aver1 of the audio signal included in the first divided data. The electronic apparatus 100 may acquire a second average value aver2 of the audio signal included in the second divided data.

The electronic apparatus 100 may compare the peak value acquired in item 2910 with the first average value aver1 or the second average value aver2. In detail, the electronic apparatus 100 may acquire a difference between the peak value and the average value. In addition, the electronic apparatus 100 may determine whether the difference is greater than or equal to the threshold value. In case that the difference is greater than or equal to the threshold value, the electronic apparatus 100 may determine that the corresponding audio data is silent. There may be the acquired audio signal, and the audio signal may include ambient noise. In case that the average value is significantly lower than the peak value, the electronic apparatus 100 may determine that the corresponding audio signal is silent.

In FIG. 29, item 2930 shows that the first divided data is divided into four audio data again. The electronic apparatus 100 may acquire the average value aver1, aver2, aver3, or aver4 based on each of the divided audio data 2931, 2932, 2933 or 2934.

The electronic apparatus 100 may compare the acquired peak value and the average values aver1, aver2, aver3, and aver4. In addition, the electronic apparatus 100 may acquire a difference between the peak value and the average values aver1, aver2, aver3 and aver4. In addition, the electronic apparatus 100 may determine whether the difference is greater than or equal to the threshold value. In case that the difference is greater than or equal to the threshold value, the electronic apparatus 100 may determine that the corresponding audio data is silent.

FIG. 30 is a view for illustrating an operation of determining whether the overlapping region is silent in various examples.

The electronic apparatus 100 may compare the overlapping region commonly included in different audio data to determine whether the audio blocks are combined with each other. The electronic apparatus 100 may determine whether the overlapping region is silent. An actual audio signal may include noise, and accordingly, the audio signal may not be perfectly measured. Accordingly, the electronic apparatus 100 may apply a standard for determining the silence to the audio analysis operation.

In FIG. 30, item 3010 shows the audio data of a period of zero seconds to 8 seconds. The electronic apparatus 100 may acquire the peak value in the entire period of the audio data. The electronic apparatus 100 may divide the audio data based on 6 seconds.

In FIG. 30, item 3020 shows the divided audio data. The electronic apparatus 100 may acquire first divided data 3021 of a period of zero seconds to 6 seconds and second divided data 3022 of a period of 6 seconds to 8 seconds by dividing the audio data of the period of zero seconds to 8 seconds.

In FIG. 30, item 3030 shows the overlapping region extracted from the divided audio data. The electronic apparatus 100 may acquire an overlapping region 3031 from the first divided data and acquire an overlapping region 3032 from the second divided data.

The electronic apparatus 100 may acquire the average value aver1 of the audio signal included in the overlapping region 3031. The electronic apparatus 100 may acquire the average value aver2 of the audio signal included in the overlapping region 3032. In addition, the electronic apparatus 100 may compare the acquired peak value and the average values aver1 and aver2 in item 3010. In detail, in case that a difference between the peak value and the average value aver1 is greater than or equal to the threshold value, the electronic apparatus 100 may determine that the overlapping region 3031 is silent. In case that the difference between the peak value and the average value aver2 is greater than or equal to the threshold value, the electronic apparatus 100 may determine that the overlapping region 3032 is silent.

A method using the difference between the peak value and the average value described with reference to FIGS. 29 and 30 may indicate variance calculation, standard deviation calculation, mean square error calculation, or the like.

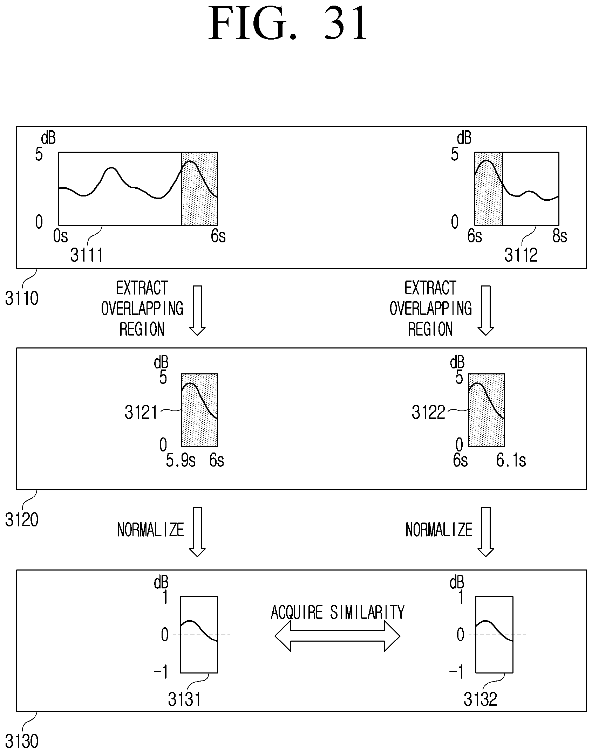

FIG. 31 is a view for illustrating an operation of acquiring the similarity.

In FIG. 31, item 3110 shows the divided audio block. The electronic apparatus 100 may acquire a first audio block 3111 and a second audio block 3112.

In FIG. 31, item 3120 shows an extracted overlapping region. The electronic apparatus 100 may acquire an overlapping region 3121 from the first audio block 3111 and acquire an overlapping region 3122 from the second audio block 3112.

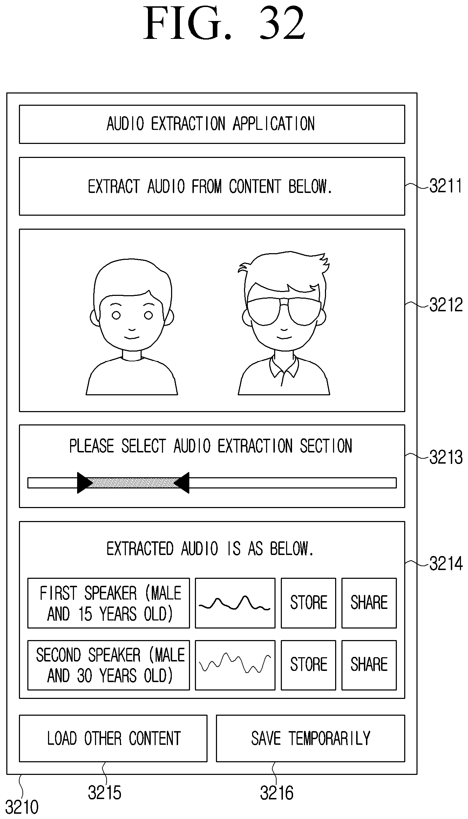

In FIG. 32, item 3130 shows a normalized overlapping region. The electronic apparatus 100 may perform a normalization operation for comparison on the same scale and accurate and fast calculation. The electronic apparatus 100 may acquire first normalized data 3131 by normalizing the overlapping region 3121. The electronic apparatus 100 may acquire second normalized data 3132 by normalizing the overlapping region 3122. The electronic apparatus 100 may acquire similarity between the first normalization data 3131 and the second normalization data 3132. Theoretically, the first normalization data 3131 and the second normalization data 3132 are required to be the same as each other because this operation is a comparison operation of data in the overlapping regions. However, the electronic apparatus 100 may determine whether the similarity is greater than or equal to the threshold value considering that noise and errors may occur in an actual calculation process. The electronic apparatus 100 may combine the first audio block 3111 and the second audio block 3112 with each other in case that the similarity between the normalized data is greater than or equal to the threshold value.

FIG. 32 is a view for illustrating a user interface (UI) related to an audio extraction operation in various examples.

Referring to FIG. 32, the electronic apparatus 100 may provide the user with a UI related to audio extraction. It may be assumed that the electronic apparatus 100 executes an audio extraction application. In addition, it may be assumed that the electronic apparatus 100 performs the audio extraction operation on a content including audio.

In various examples, the content including the audio may be the audio data including only the audio. In various examples, the content including the audio may be a content including both the audio and an image.

It may be assumed that the user inputs a command for extracting the audio signal for a specific content to the electronic apparatus 100. The electronic apparatus 100 may perform the audio signal extraction operation for the specific content selected by the user by using an application related to the audio signal.

The electronic apparatus 100 may provide (or display) a screen 3210 related to the audio signal extraction. The screen 3210 may include at least one of a UI 3211 including text information 3211 indicating that the audio extraction operation is performed, a UI 3212 including an image of a content which is a subject to the audio extraction operation, a UI 3213 for selecting an audio extraction period, a UI 3214 including result information of the audio extraction operation, a UI 3215 for performing the audio extraction operation on another content, or a UI 3216 for temporarily storing all result information of the audio extraction operation.

Meanwhile, the UI 3214 may include information on at least one audio signal extracted from the specific content. The information may include at least one of identification information indicating the extracted (or separated) audio source (e.g., first speaker) or feature information indicating the audio source (e.g., male and 15 years old). In addition, the information may include a signal waveform of the extracted (or separated) audio source. The UI 3214 may include a UI for separately storing (or sharing) each extracted (or separated) audio source.

Meanwhile, the screen 3210 may further include a UI for user input for executing the audio extraction operation. The execution UI may be included in either the UI 3211 or the UI 3213.

Meanwhile, the electronic apparatus 100 may separately store (or share) each audio signal separated based on the user input received through the UI 3214.

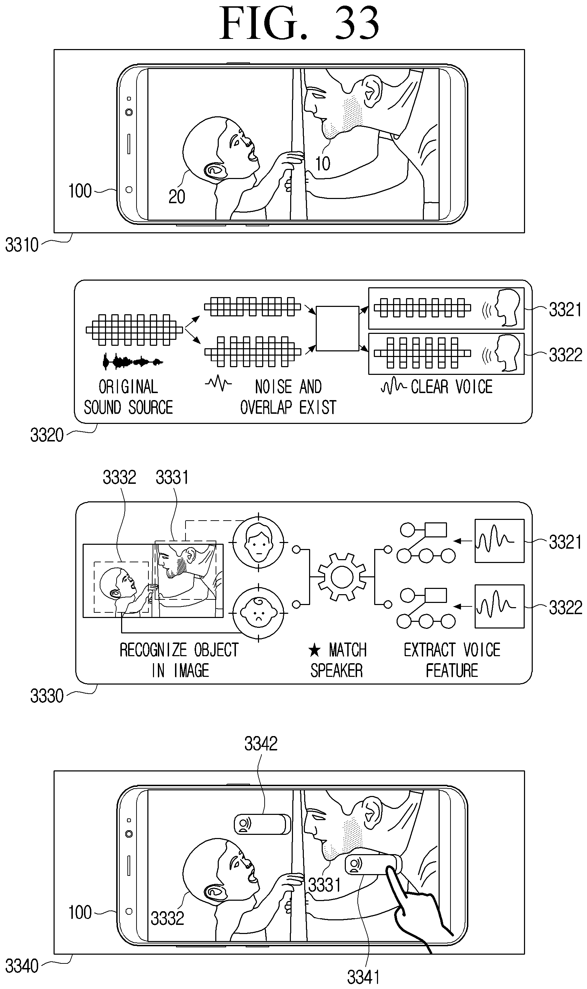

FIG. 33 is a view for illustrating an operation of displaying a UI for changing a volume of the separated audio data at a location corresponding to a specific object.

Referring to item 3310 of FIG. 33, the electronic apparatus 100 may receive a content including image data and audio data. The image data in the received content may include a first speaker 10 and a second speaker 20. The audio data in the received content may include a voice of the first speaker 10 and a voice of the second speaker 20.

Audio data in the received content may be the audio signal including the voice of the first speaker 10 and the voice of the second speaker 20 together. The electronic apparatus 100 may separate (or divide) the voice of the first speaker 10 and the voice of the second speaker 20 from each other.

Referring to item 3320, the electronic apparatus 100 may acquire the audio data from the received content. Here, the audio data may be an original sound source. Therefore, the audio data included in the content may be referred to as the original audio data. The electronic apparatus 100 may divide first audio data 3321 and the second audio data 3322 separated from the original audio data based on the audio source.

The electronic apparatus 100 may divide the original audio data for each audio source. The electronic apparatus 100 may identify whether the plurality of audio sources exist in the original audio data in the received content based on the audio feature. In case that the plurality of audio sources exist in the original audio data, the electronic apparatus 100 may extract the audio data corresponding to each of the plurality of audio sources from the original audio data. The electronic apparatus 100 may specify the audio source based on the audio feature. For example, the audio source may be specified based on representative feature information (e.g., gender or age).

Referring to item 3330, the electronic apparatus 100 may identify a predetermined object from the image data in the received content. The predetermined object may indicate an object that is likely to be the audio source. The object may indicate a human object, an animal object, a speaker object, or the like that may output the audio. The electronic apparatus 100 may identify the predetermined object based on the image data.

The electronic apparatus 100 may map (or match) the identified object and the extracted audio data. A standard for mapping the identified object and the extracted audio data may be required. The electronic apparatus 100 may map the identified object and extracted audio data based on the representative feature information.

The electronic apparatus 100 may acquire the representative feature information of the audio source based on the extracted audio data. That is, the electronic apparatus 100 may analyze the audio data to acquire the representative feature information corresponding to the audio data, and may specify the audio data (or audio source) based on the acquired representative feature information.

The electronic apparatus 100 may acquire the representative feature information of an object based on the identified object. The identified object may be an object that is likely to be the audio source, and the representative feature information of the object may thus be referred to as the representative feature information of the audio source. That is, the electronic apparatus 100 may acquire the representative feature information of the identified object by analyzing the image data, and may specify the object (or audio source) based on the acquired representative specific information.

The electronic apparatus 100 may compare the representative feature information acquired based on the audio data and the representative feature information acquired based on the image data. The electronic apparatus 100 may perform a mapping operation based on a comparison result. In detail, the electronic apparatus 100 may map the audio data and the object based on whether the representative feature information match each other. In case that the representative feature information of the first audio data matches the representative feature information of a first object, the electronic apparatus 100 may map the first audio data and the first object each other.

In various examples, the similarity may be determined as a standard for a matching degree. The electronic apparatus 100 may map the first audio data and the first object each other in case that the similarity between the representative feature information of the first audio data and the representative feature information of the first object is greater than or equal to the threshold value.

For example, the electronic apparatus 100 may acquire representative feature information (male and 30 to 39 years old) of the first audio data 3321 acquired in item 3320 and acquire representative feature information (male and zero to 9 years old) of the second audio data 3322.

For example, the electronic apparatus 100 may identify a first object 3331 corresponding to the first speaker 10 and a second object 3332 corresponding to the second speaker 20 from the images described in item 3310. The electronic apparatus 100 may acquire the representative feature information (male and 30 to 39 years old) of the first object 3331 and acquire the representative feature information (male and zero to 9 years old) of the second object 3332.

For example, the representative feature information (male and 30 to 39 years old) of the first audio data 3321 may match the representative feature information (male and 30 to 39 years old) of the first object 3331, and the electronic apparatus 100 may thus map the first audio data 3321 and the first object 3331 with each other. In addition, the representative feature information (male and zero to 9 years old) of the second audio data 3322 may match the representative feature information (male and zero to 9 years old) of the second object 3332, and the electronic apparatus 100 may thus map the second audio data 3322 and the second object 3332 with each other.

Referring to item 3340, the electronic apparatus 100 may display a UI for changing a volume of the audio data based on a mapping result. In detail, the electronic apparatus 100 may display the UI for changing the volume of the audio data at a location corresponding to a mapped object.

For example, it may be assumed that the first audio data 3321 and the first object 3331 are mapped with each other. It may also be assumed that the second audio data 3322 and the second object 3332 are mapped with each other. The electronic apparatus 100 may display a UI 3341 for changing a volume of the first audio data 3321 at a location corresponding to the first object 3331. In addition, the electronic apparatus 100 may display a UI 3342 for changing a volume of the second audio data 3322 at a location corresponding to the second object 3332.

In case of receiving the user input for changing the volume through the UI 3341 or 3342, the electronic apparatus 100 may change the volume of the audio data corresponding to the location where the user input is received.

For example, in case that the user input is received through the UI 3341, the electronic apparatus 100 may change the volume of the first audio data 3321 based on the user input. In addition, in case that the user input is received through the UI 3342, the electronic apparatus 100 may change the volume of the second audio data 3322 based on the user input.

The user input may be either a touch input or a drag input.

It may be assumed that the user input is the touch input. In case of receiving the user input of touching the left or the bottom, the electronic apparatus 100 may change the volume of the audio data corresponding to the location where the user input is received to be smaller than a currently set value. On the other hand, in case of receiving the user input of touching the right or the top, the electronic apparatus 100 may change the volume of the audio data corresponding to the location where the user input is received to be greater than the currently set value.

It may be assumed that the user input is the drag input. In case of receiving the user input of dragging to the left or to the bottom, the electronic apparatus 100 may change the volume of the audio data corresponding to the location where the user input is received to be smaller than the currently set value. On the other hand, in case of receiving the user input of dragging to the right or the top, the electronic apparatus 100 may change the volume of the audio data corresponding to the location where the user input is received to be greater than the currently set value.

Meanwhile, FIG. 33 shows the first speaker 10 and the second speaker 20. However, the first speaker 10 and the second speaker 20 may be described as the first audio source and the second audio source. That is, the operation applied in FIG. 33 may not necessarily be applied only to the human voice, and a volume control function may be applied to each audio source.

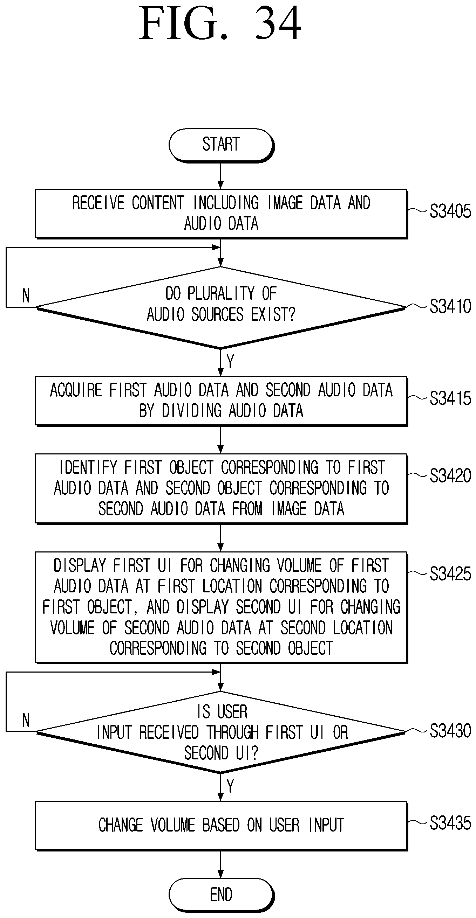

FIG. 34 is a flowchart illustrating an operation of displaying the UI for changing the volume of the separated audio data at the location corresponding to the specific object.

Referring to FIG. 34, the electronic apparatus 100 may receive the content including the image data and the audio data (S3405). The electronic apparatus 100 may identify the audio source from the content. In addition, the electronic apparatus 100 may identify the number of audio sources identified from the content.

The electronic apparatus 100 may determine whether the plurality of audio sources exist (S3410). In case that no plurality of audio sources exists (S3410-N), the electronic apparatus 100 may repeat operation S3410 until identifying the plurality of audio sources. It may be assumed that the electronic apparatus 100 finally analyzes two audio sources.

In case that there are the plurality of audio sources (S3410-Y), the electronic apparatus 100 may acquire the first audio data and the second audio data by dividing (or separating) the audio data (S3415). The first audio data may include the audio signal corresponding to the first audio source, and the second audio data may include the audio signal corresponding to the second audio source.

Meanwhile, the electronic apparatus 100 may identify the first object corresponding to the first audio data and the second object corresponding to the second audio data from the image data (S3420).

The electronic apparatus 100 may use the representative feature information to identify the first object corresponding to the first audio data and the second object corresponding to the second audio data.

In various examples, the electronic apparatus 100 may identify the object corresponding to the audio data by comparing the representative feature information of the audio data and the representative feature information of the object.

For example, the electronic apparatus 100 may acquire the representative feature information (male and 30 to 39 years old) of the first audio data and acquire the representative feature information of each of the plurality of objects included in the image data. It may be assumed that "male and 30 to 39 years old" is the representative feature information of the first object among the plurality of obj ects. The representative feature information (male and 30 to 39 years old) of the first audio data may match the representative feature information (male and 30 to 39 years old) of the first object, and the electronic apparatus 100 may thus identify that the first object is an object corresponding to the first audio data.

In addition, the electronic apparatus 100 may acquire the representative feature information of only the predetermined object among the plurality of objects included in the image data. A description thereof is described with reference to FIG. 33.

Meanwhile, in various examples, the electronic apparatus 100 may identify the object corresponding to the audio data from the image data based on the representative feature information of the audio data.

For example, the electronic apparatus 100 may identify the object representing the representative feature information (male and 30 to 39 years old) among the plurality of objects included in the image data as the first object, based on the representative feature information (male, 30-39 years old) of the first audio data.

After identifying the object corresponding to each audio data, the electronic apparatus 100 may display a first UI for changing the volume of the first audio data at a first location corresponding to the first object, and display a second UI for changing the volume of the second audio data at a second location corresponding to the second object (S3425).

The electronic apparatus 100 may determine whether the user input is received through the first UI or the second UI (S3430). In case of receiving no user input through the first UI or the second UI (S3430-N), the electronic apparatus 100 may repeat operation S3430.

In case of receiving the user input through the first UI or the second UI (S3430-Y), the electronic apparatus 100 may change the volume based on the user input (S3435). For example, in case of receiving the user input through the first UI, the electronic apparatus 100 may change the volume of the first audio data. In addition, in case of receiving the user input through the second UI, the electronic apparatus 100 may change the volume of the second audio data.

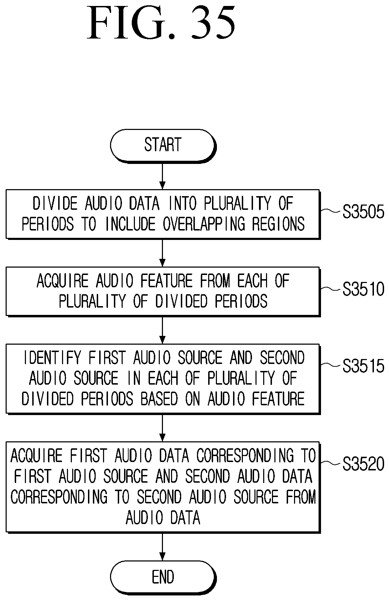

FIG. 35 is a flowchart for illustrating a controlling method of an electronic apparatus 100 in various embodiments.

Referring to FIG. 35, a controlling method of the electronic apparatus 100 may include: dividing audio data into a plurality of periods to include overlapping regions (S3505); acquiring an audio feature from each of the plurality of divided periods (S3510); identifying a first audio source and a second audio source in each of the plurality of divided periods based on the audio feature (S3515); and acquiring first audio data corresponding to the first audio source and second audio data corresponding to the second audio source from the audio data (S3520).

Meanwhile, the dividing (S3505) may include acquiring first divided data of a first period and second divided data of a second period different from the first period by dividing the audio data, and the first divided data and the second divided data may include the overlapping regions.

Meanwhile, the controlling method may further include identifying a plurality of audio blocks to be divided based on the audio source in each of the plurality of divided periods, wherein in the acquiring of the first audio data and the second audio data (S3520), the first audio data may be acquired by combining the audio blocks corresponding to the first audio source with each other, and the second audio data may be acquired by combining the audio blocks corresponding to the second audio source with each other.

Meanwhile, in the acquiring of the first audio data and the second audio data (S3520), the overlapping regions included in the plurality of audio blocks may be identified, and the first audio data and the second audio data may be acquired by comparing the identified overlapping regions with each other.

Meanwhile, the controlling method may further include acquiring similarity between the overlapping regions included in the plurality of audio blocks, wherein in the acquiring of the first audio data and the second audio data (S3520), the first audio data and the second audio data may be acquired by combining the audio blocks each having the similarity greater than or equal to a first threshold value with each other.

Meanwhile, the controlling method may further include extending the overlapping region in case that the similarity is less than the first threshold value and greater than or equal to a second threshold value, and dividing the audio data based on the extended overlapping region.

Meanwhile, the controlling method may further include acquiring a peak value of an audio signal included in a first audio block among the audio blocks, acquiring an average value of the audio signal included in the overlapping region of the first audio block, and identifying whether the overlapping region is silent based on a difference between the peak value and the average value.

Meanwhile, in the dividing (S3505), the number of audio sources included in the audio data may be identified, and the audio data may be divided in case that the number of identified audio sources is less than a threshold number.

Meanwhile, in the dividing (S3505), the audio data may be divided in case that a time of the audio data is greater than or equal to a threshold time.

Meanwhile, in the dividing (S3505), the number of audio sources included in the audio data may be identified based on a first artificial intelligence model, and in the acquiring of the first audio data and the second audio data (S3520), the first audio data and the second audio data may be acquired based on a second artificial intelligence model different from the first artificial intelligence model.

Meanwhile, the controlling method of an electronic apparatus as shown in FIG. 35 may be executed by an electronic apparatus having the configuration of FIG. 1 or 2, and also by an electronic apparatus having another configuration.

Meanwhile, the method in the various examples of the disclosure described above may be implemented in the form of an application which may be installed on the existing electronic apparatus.

In addition, the method in the various examples of the disclosure described above may be implemented only by software upgrade or hardware upgrade for the existing electronic apparatus.

In addition, the various embodiments of the disclosure described above may be performed through an embedded server included in the electronic apparatus, or an external server of at least one of the electronic apparatus or a display device.

Meanwhile, according to an example embodiment of the disclosure, the various examples described above may be implemented by software including an instruction stored in a machine-readable storage medium (for example, a computer-readable storage medium). A machine may be a device that invokes the stored instruction from the storage medium and operates based on the invoked instruction, and may include the electronic apparatus in the disclosed examples. In case that the instruction is executed by the processor, the processor may directly perform a function corresponding to the instruction or other components may perform the function corresponding to the instruction under a control of the processor. The instruction may include codes provided or executed by a compiler or an interpreter. The machine-readable storage medium may be provided in the form of a non-transitory storage medium. Here, the term "non-transitory" indicates that the storage medium is tangible without including a signal, and does not divide whether data are semi-permanently or temporarily stored in the storage medium.

In addition, according to various embodiments of the disclosure, the method in the various examples described above may be provided by being included in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStore^{™}). In case of the online distribution, at least portions of the computer program product may be at least temporarily stored in a storage medium such as a memory of a server of a manufacturer, a server of an application store or a relay server, or be temporarily provided.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the embodiments of the disclosure are shown and described hereinabove, the disclosure is not limited to the above-mentioned specific embodiments, and may be variously modified by those skilled in the art to which the disclosure pertains without departing from the scope and spirit of the disclosure as disclosed in the accompanying claims. These modifications also need to be understood to fall within the scope of the disclosure.

## Claims

1. An electronic apparatus comprising:
a memory configured to store at least one instruction; and
at least one processor configured to execute the at least one instruction to:
divide audio data into a plurality of sections of audio data based on a plurality of time periods having a plurality of overlapping regions,
acquire an audio feature from each of the plurality of sections ,
identify a first audio source and a second audio source in each of the plurality of sections based on the audio feature, and
acquire first audio data corresponding to the first audio source and second audio data corresponding to the second audio source from the audio data.

2. The electronic apparatus as claimed in claim 1, wherein the at least one processor is further configured to divide the audio data to:
acquire a first section corresponding to a first period, among the plurality of time periods, and
acquire a second corresponding to a second period, among the plurality of time periods,
wherein the second period is different from the first period, and
wherein the first section and the second section comprises an overlapping region, among the overlapping regions.

3. The electronic apparatus as claimed in claim 1, wherein the at least one processor is configured to:
identify a plurality of audio blocks based on the first audio source or the second audio source in each of the plurality of time periods;
acquire the first audio data by combining two or more first audio blocks, among the plurality of audio blocks, corresponding to the first audio source with each other; and
acquire the second audio data by combining two or more second audio blocks, among the plurality of audio blocks, corresponding to the second audio source with each other.

4. The electronic apparatus as claimed in claim 3, wherein the at least one processor is further configured to:
identify the overlapping regions in the plurality of audio blocks, and
acquire the first audio data and the second audio data by comparing the plurality of overlapping regions with each other.

5. The electronic apparatus as claimed in claim 3, wherein the at least one processor is further configured to:
acquire similarity between the plurality of overlapping regions in the plurality of audio blocks,
acquire the first audio data by combining the two or more first audio blocks having similarity greater than or equal to a first threshold value; and
acquire the second audio data by combining the two or more second audio blocks having similarity greater than or equal to the first threshold value.

6. The electronic apparatus as claimed in claim 5, wherein the at least one processor is further configured to:
extend at least one of the overlapping regions when the similarity is less than the first threshold value and greater than or equal to a second threshold value, and
divide the audio data based on the extended overlapping region.

7. The electronic apparatus as claimed in claim 3, wherein the at least one processor is further configured to:
acquire a peak value of an audio signal in a first audio block among the plurality of audio blocks,
acquire an average value of the audio signal included in an overlapping region of the first audio block, and
identify whether the overlapping region is silent based on a difference between the peak value and the average value.

8. The electronic apparatus as claimed in claim 1, wherein the at least one processor is further configured to:
identify a number of audio sources included in the audio data, and
divide the audio data when the number of audio sources that is identified is less than a threshold number.

9. The electronic apparatus as claimed in claim 8, wherein the at least one processor is further configured to divide the audio data when a duration of the audio data is greater than or equal to a threshold time.

10. The electronic apparatus as claimed in claim 8, wherein the at least one processor is configured to:
identify the number of audio sources in the audio data based on a first artificial intelligence model stored in the memory, and
acquire the first audio data and the second audio data based on a second artificial intelligence model stored in the memory, the first artificial intelligence model being different from the first artificial intelligence model.

11. A controlling method of an electronic apparatus, the method comprising:
dividing audio data into a plurality of sections of audio data based on a plurality of time periods having a plurality of overlapping regions;
acquiring an audio feature from each of the plurality of sections;
identifying a first audio source and a second audio source in each of the plurality of sections based on the audio feature; and
acquiring first audio data corresponding to the first audio source and second audio data corresponding to the second audio source from the audio data.

12. The method as claimed in claim 11, wherein the dividing the audio data comprises:
acquiring a first section corresponding to a first period, among the plurality of time periods, and
acquiring a second section corresponding to a second period, among the plurality of time periods,
wherein the second period is different from the first period, and
wherein the first section and the second section comprises an overlapping region, among the overlapping regions.

13. The method as claimed in claim 11, further comprising:
identifying a plurality of audio blocks based on the first audio source or the second audio source in each of the plurality of time periods,
wherein the acquiring the first audio data and the second audio data comprises:
acquiring the first audio data by combining two or more first audio blocks, among the plurality of audio blocks, corresponding to the first audio source with each other; and
acquiring the second audio data by combining two or more second audio blocks, among the plurality of audio blocks, corresponding to the second audio source with each other.

14. The method as claimed in claim 13, wherein the acquiring of the first audio data and the second audio data comprises:
identifying the plurality of overlapping regions in the plurality of audio blocks, and
acquiring the first audio data and the second audio data by comparing the plurality of overlapping regions with each other.

15. The method as claimed in claim 14, further comprising:
acquiring similarity between the plurality of overlapping regions in the plurality of audio blocks, wherein the acquiring the first audio data and the second audio data comprises:
acquiring the first audio data by combining the two or more first audio blocks having similarity greater than or equal to a first threshold value; and
acquiring the second audio data by combining the two or more second audio blocks having similarity greater than or equal to the first threshold value.
